(19) **Europäisches Patentamt / European Patent Office / Office européen des brevets**

(11) **EP 4 054 353 B1**

(12) **FASCICULE DE BREVET EUROPEEN**

(45) Date de publication et mention de la délivrance du brevet:
**27.09.2023 Bulletin 2023/39**

(21) Numéro de dépôt: **20816560.5**

(22) Date de dépôt: **09.11.2020**

(51) Classification Internationale des Brevets (IPC):
*A23L 33/12* (2016.01)   *A23L 33/15* (2016.01)
*A61K 9/50* (2006.01)   *A23P 10/30* (2016.01)

(52) Classification Coopérative des Brevets (CPC):
**A23P 10/30**

(86) Numéro de dépôt international:
**PCT/FR2020/052042**

(87) Numéro de publication internationale:
**WO 2021/089971 (14.05.2021 Gazette 2021/19)**

(54) **ALIMENT OU COMPLÉMENT ALIMENTAIRE POUR ANIMAUX D'ÉLEVAGE**

FUTTER ODER NAHRUNGSERGÄNZUNGSMITTEL FÜR ZUCHTTIERE

FOOD OR FOOD SUPPLEMENT FOR FARM ANIMALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **07.11.2019 FR 1912521**

(43) Date de publication de la demande:
**14.09.2022 Bulletin 2022/37**

(73) Titulaire: **Huddle Corp**
**44300 Nantes (FR)**

(72) Inventeurs:
• **EL HARRAK, Abdeslam**
**57380 FAULQUEMONT (FR)**
• **CRETEL, César, Adrien, Claude, René**
**92600 ASNIERES (FR)**

(74) Mandataire: **Regimbeau**
**20, rue de Chazelles**
**75847 Paris Cedex 17 (FR)**

(56) Documents cités:
WO-A1-2009/089115   WO-A1-2013/119384
WO-A1-2016/193373   US-A1- 2003 064 133
US-A1- 2006 068 019   US-A1- 2017 258 725

## Description

### Domaine de l'invention

L'invention a pour objet un aliment ou un complément alimentaire pour animaux d'élevage monogastriques, notamment des poissons. En particulier, l'invention concerne des aliments ou compléments alimentaires permettant une libération contrôlée des substances actives qu'ils comportent.

### État de la technique

Il est bien connu d'utiliser des substances physiologiquement actives pour compléter la nourriture d'animaux d'élevage pour améliorer leurs conditions sanitaires et accélérer leur croissance.

De telles substances physiologiquement actives peuvent être des protéines, des lipides, des glucides, mais également des vitamines et toute forme de supplémentation alimentaire visant les prébiotiques, probiotiques, acides aminés, antioxydants, ou autres molécules (i.e. huiles essentielles) à visée nutraceutique ou thérapeutique directe ou indirecte.

La diversité des conditions dans lesquelles les aliments sont ingérés et digérés nécessite une réponse adaptée à chaque espèce et à chaque stade de maturité des animaux.

À titre d'exemple, le document JPH10327770 décrit des microcapsules contenant une phase aqueuse avec des substances actives hydrosolubles dispersée dans une phase lipidique avec des substances actives liposolubles, l'ensemble étant enrobé d'un polymère biodégradable dispersé lors de la préparation dans un mélange huile/solvant organique. Les microcapsules ont une taille de 5 à 20 μm et sont aptes à nourrir des rotifères, eux-mêmes proies pour des alevins d'élevage. Comme exemples de polymères biodégradables d'enrobage, sont cités les polysaccharides, les polypeptides, les polyesters aliphatiques et la gélatine. Les polysaccharides sont préférés. Le procédé de préparation du système d'enrobage décrit dans ce document nécessite une mise en solution du biopolymère d'enrobage dans un solvant organique ce qui n'est pas conseillé pour un produit destiné à entrer dans la chaîne alimentaire. De plus le système d'enrobage ne peut être dissous dans le système digestif de l'animal que par scissions des chaînes. Cela nécessite une cinétique et des enzymes appropriés souvent obtenues par l'action du microbiote en fin de tube digestif. Par exemple la cellulose n'est pas digestible chez les poissons car ils ne peuvent pas opérer ces scissions de chaînes. En conséquence, la digestion peut être ralentie et retardée par la faible digestibilité des fibres utilisées.

L'intérêt demeure pour des aliments ou des compléments alimentaires dont les structures et les procédés de fabrication permettent de proposer une réponse adaptée à chaque espèce et à chaque stade de maturité des animaux.

Et en particulier, le besoin existe pour des aliments et compléments alimentaires qui permettent un relargage rapide des substances actives ou nutriments mais séquencé, c'est-à-dire dans des zones précises et identifiées du système digestif de l'animal cible pour une meilleure métabolisation de ces nutriments.

### Description brève de l'invention

L'invention a pour objet les produits suivants :

1. Aliment ou complément alimentaire permettant une libération contrôlée de substances nutritives et/ou physiologiquement actives pour animaux monogastriques, comprenant un noyau 12 et un enrobage 14 du noyau 12, ledit noyau 12 comprenant une phase aqueuse A avec des substances actives hydrosolubles et une phase lipidique 18 avec des composants actifs liposolubles, tel que la phase aqueuse A est constituée de particules gélifiées 16, les particules 16 sont dispersées dans la phase lipidique 18 et tel que la phase lipidique 18 comporte une charge minérale exfoliée choisie dans le groupe des phyllosilicates. L'aliment ou complément alimentaire se présente ainsi sous la forme d'objets O à empilement modulaires.

2. Aliment ou complément alimentaire selon le produit 1, dans lequel le phyllosilicate est une smectite.

3. Aliment ou complément alimentaire selon l'un quelconque des produits précédents, dans lequel la dispersion de la charge minérale dans la phase lipidique 18 est réalisée en présence d'un agent de surface.

4. Aliment ou complément alimentaire selon le produit 3, dans lequel l'agent de surface a une tête polaire cationique ou zwitterionique.

5. Aliment ou complément alimentaire selon le produit 3 ou 4, dans lequel l'agent de surface est de la lécithine.

6. Aliment ou complément alimentaire selon l'un quelconque des produits précédents, dans lequel ladite charge minérale a une teneur dans ladite phase lipidique 18 comprise entre 0,5 et 35 % en poids par rapport au poids de ladite phase lipidique 18 et de préférence inférieure à 15 %.

7. Aliment ou complément alimentaire selon l'un quelconque des produits précédents, dans lequel comprenant une phase protidique gélifiée 11 disposée entre le noyau 12 et l'enrobage 14.

8. Aliment ou complément alimentaire selon le produit 7, dans lequel la phase protidique gélifiée comporte une charge minérale.

- Aliment ou complément alimentaire selon l'un quelconque des produits précédents, dans lequel le noyau 12 et éventuellement la phase protidique 11 est enrobé dans une alternance de polymères de charges opposées, formant un coacervat.

9. Aliment ou complément alimentaire selon l'un quelconque des produits précédents, dans lequel l'enrobage 14 du noyau 12 comporte n couches C de matériaux biocompatibles avec un empilement alterné de charges électrostatiques positives et négatives qui forment des coacervats réticulés et structurés en empilement de couches, n étant au moins égal à 2 et les n couches C comprenant au moins une couche C+ comprenant un matériau biocompatible M+ à charges électrostatiques positives et un agent de réticulation R- choisi parmi les anions multichargés, et au moins une couche C- comprenant un matériau biocompatible M- à charges électrostatiques négatives et un agent de réticulation R+ choisi parmi les cations multivalents

10. Aliment ou complément alimentaire selon le produit 9, dans lequel les couches d'enrobages 14 comportent avantageusement une couche de matériau de renfort MR.

11. Aliment ou complément alimentaire selon l'un des produits 9 à 10, dans lequel la charge minérale ou le matériau de renfort est choisi dans le groupe des argiles, des silices et des fibres chargées, avantageusement dans le groupe des phyllosilicates.

12. Aliment ou complément alimentaire selon le produit 11, dans lequel le phyllosilicate est une smectite.

13. Aliment ou complément alimentaire selon l'un quelconque des produits précédents, dans lequel la phase aqueuse A comporte un polysaccharide fonctionnalisé carboxylique chargé négativement, tel un alginate avec une teneur comprise entre 1 et 8 % en poids par rapport au poids d'un extrait sec de ladite phase aqueuse, préférentiellement inférieur à 5,5%, avantageusement compris entre 1 et 4%.

14. Aliment ou complément alimentaire selon le produit 13, dans lequel la phase aqueuse A est gélifiée par réaction du polysaccharide chargé avec des réactifs tels un sel de calcium en présence de pyrophosphate ou deltagluconolactone.

La présence d'une charge minérale exfoliée de type phyllosilicate, par exemple une smectite exfoliée, dans la matrice lipidique 18 du noyau a l'avantage de permettre de moduler la densité des produits et donc leur flottabilité. Cette charge minérale exfoliée se présente en feuillets distincts ce qui lui donne une très haute surface spécifique comprise entre 100 $m^2$/g et 800 $m^2$/g, avantageusement entre 200 $m^2$/g et 500 $m^2$/g selon la qualité de l'exfoliation. Les petites molécules telles celles d'oxygène peuvent être adsorbée sur ces feuillets. Cette charge minérale exfoliée constitue ainsi une barrière qui s'oppose à la pénétration et la diffusion des molécules agressives depuis l'extérieur vers les nutriments contenus dans les produits, en particulier de l'oxygène. Elle permet aussi de microstructurer la phase lipidique 18 grâce à une organisation fractale de la charge minérale pouvant percoler dans les trois dimensions jusqu'à couvrir l'ensemble de la phase lipidique, contribuant ainsi au confinement des nutriments et autres molécules d'intérêt. La présence de feuillets de phyllosilicates permet aussi d'adsorber des molécules d'intérêt apportant des propriétés supplémentaires à la phase lipidique 18. Par exemple les feuillets de phyllosilicates de haute surface spécifique peuvent être le support pour disperser des molécules protectrices telles que des antioxydants polaires, alors qu'ils ne sont pas ou peu solubles dans une phase lipidique. C'est le cas, à titre d'exemple, de la vitamine C, de certains polyphénols hydrosolubles, de flavonoïdes, etc.

En outre, la gélification de la phase aqueuse A dispersée dans la matrice lipidique 18 a pour avantage de limiter la fuite des nutriments vers l'extérieur. Elle permet aussi de stabiliser la taille des particules en évitant leur coalescence et donc d'augmenter la surface d'interface de la phase aqueuse A avec les agents de digestion et donc d'accélérer la vitesse de relargage en phase de digestion.

## Description des Figures

L'invention est décrite ci-après à l'aide des figures 1 à 14, données uniquement à titre d'illustration :

- [Fig. 1] présente schématiquement en coupe et sans respect des dimensions respectives un premier produit objet de l'invention ;
- [Fig. 2] présente schématiquement en coupe un deuxième produit objet de l'invention ;
- [Fig. 3] présente schématiquement en coupe un troisième produit objet de l'invention ;
- [Fig. 4] présente schématiquement un mode de réalisation d'un enrobage du noyau d'un produit objet de l'invention ;
- [Fig. 5] présente un schéma d'un procédé de fabrication du premier produit ;
- [Fig. 6] présente un schéma des étapes additionnelles pour la fabrication du troisième produit ;
- [Fig. 7] présente la distribution de tailles des particules aqueuses ;
- [Fig. 8] présente la distribution de tailles des particules lipidiques ;
- [Fig. 9] présente l'évolution de l'indice d'iode mesuré au cours du vieillissement à l'air libre de particules lipidiques ;
- [Fig. 10] présente une image d'une particule lipidique obtenue au microscope électronique à balayage ;
- [Fig. 11] présente une courbe de suivi du comportement rhéologique d'une couche protidique ;
- [Fig. 12] présente un exemple de particules protidiques obtenues après gélification ;
- [Fig. 13] présente le suivi conductimétrique des ajouts dosés de biopolymères chargés dans l'eau ; et
- [Fig. 14] présente l'évolution de la conductivité de particules lipidiques en fonction d'ajouts dosés de biopolymères chargés.
- [Fig. 15] présente le schéma de principe de la diffusion aux petits angles.
- [Fig. 16] présente le spectre de diffusion aux petits angles de la bentonite dispersée dans l'huile de tournesol.
- [Fig. 17] présente les données SAXS des dispersions de bentonite en représentation de Porod $Iq^4 = f(q)$.

## Description détaillée de l'invention

On appellera « objet » ou « élément » les différentes parties constitutives des aliments ou compléments alimentaire selon l'invention.

On appellera « produit » les aliments et compléments alimentaires selon l'invention, obtenus par empilement des différents objets.

Par « gel », on entend un matériau principalement constitué de liquide, mais qui a un comportement proche de celui d'un solide grâce à un réseau tridimensionnel enchevêtré au sein du liquide. Ce sont ces enchevêtrements qui donnent aux gels leur structure et leurs propriétés. Le réseau tridimensionnel de solides dilué dans le liquide peut être le résultat de liaisons chimiques ou physiques, ou bien de petits cristaux ou encore d'autres liaisons qui demeurent intactes dans le liquide de dispersion.

Dans le cadre de la présente invention, par le terme « charge minérale exfoliée », on entend une charge minérale ayant subi une exfoliation, c'est-à-dire une séparation plus ou moins complète de ses feuillets individuels. Le procédé d'exfoliation comprend usuellement trois phases :

- (1) Le pré-gonflement des feuillets de phyllosilicate par gonflement dans de l'eau,
- (2) L'adsorption d'une molécule hydrophobe à la surface des particules de phyllosilicates, pour la rendre compatible avec la phase lipidique de dispersion, par exemple de la lécithine, et
- (3) L'apport d'énergie de cisaillement pour séparer les particules de phyllosilicate en solution.

Dans le cadre de la présente invention, la surface spécifique (Ss) appelée aussi « Aire massique » représente la surface de l'objet (As) par unité de masse (M) et on l'exprime généralement en $m^2/g$. La surface spécifique désigne la superficie réelle de la surface accessible d'un objet par opposition à sa surface apparente.

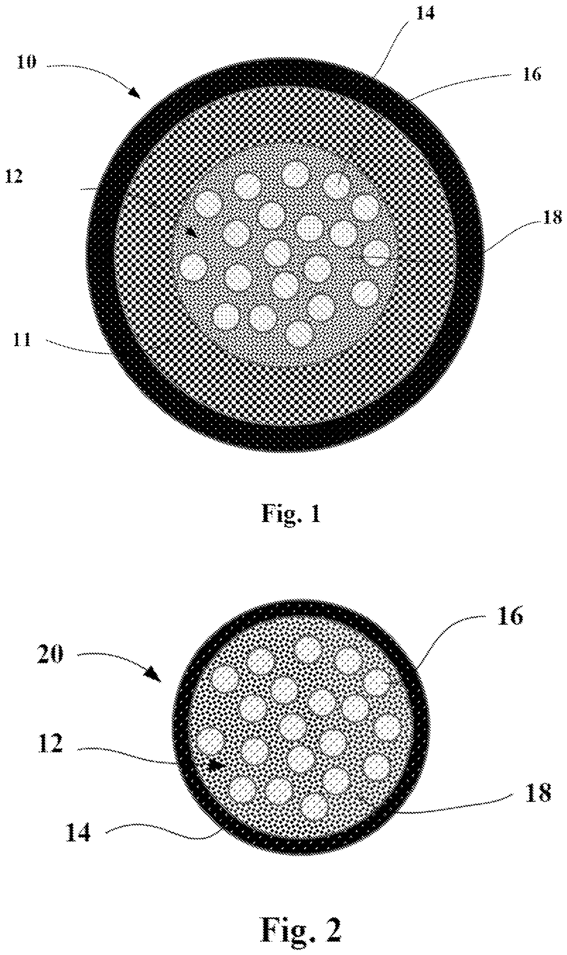

La figure 1 présente schématiquement et en coupe sans aucun respect des dimensions respectives de chaque phase un premier produit 10 comportant une phase lipidique 18 comportant une charge minérale selon l'un des objets de l'invention.

Ce premier produit 10 comprend un noyau 12, une phase protidique 11 et un enrobage 14 de l'ensemble du noyau 12 et de la phase protidique 11. Le noyau 12 comprend une phase aqueuse A sous forme de particules gélifiées sphériques (ou irrégulières) 16, les particules 16 sont dispersées dans une matrice lipidique 18. La phase protidique 11 entoure le noyau 12 et est entourée par l'enrobage 14.

Un premier élément ou objet de ce premier produit 10 est qu'il contient une phase aqueuse gélifiée A contenant des substances actives hydrosolubles, dont notamment des nutriments. Ainsi, les particules gélifiées 16 contiennent des substances actives hydrosolubles, dont notamment des nutriments.

Avantageusement, la taille des particules gélifiées 16 est comprise entre 1 et 200 $\mu$m et de préférence comprise entre 20 et 100 μm.

La gélification de la phase aqueuse A permet de limiter la fuite des nutriments et des substances actives à l'extérieur des particules 16. Elle permet aussi une stabilisation de la taille des particules 16 en limitant les coalescences et ainsi d'augmenter la surface spécifique de la phase aqueuse A, à savoir la somme des surfaces spécifiques de chaque particule gélifiée 16, et donc d'accélérer la vitesse de relargage des substances actives qu'elle contient en phase de digestion.

Selon un mode de réalisation préférentiel, la phase aqueuse A comporte un polysaccharide anionique tel un alginate avec une teneur comprise entre 1 et 4 % en poids par rapport au poids de la phase aqueuse.

Selon un mode de réalisation préférentiel, la phase aqueuse A comporte un polysaccharide fonctionnalisé carboxylique, et ainsi chargé négativement dans les conditions de pH appropriées, tel un alginate avec une teneur comprise entre 1 et 8 % en poids de polysaccharide fonctionnalisé carboxylique par rapport au poids d'un extrait sec de la phase aqueuse A, c'est-à-dire par rapport au poids d'un extrait sec de l'ensemble des particules gélifiées 16, et avantageusement compris entre 1 et 5,5% en poids, plus avantageusement compris entre 1 et 4% en poids.

La phase aqueuse A peut avantageusement être gélifiée par réaction du polysaccharide anionique, avantageusement fonctionnalisé carboxylique, avec des réactifs tels qu'un sel de calcium ainsi que du pyrophosphate ou deltagluconolactone.

Le sel de calcium peut être choisi dans le groupe des sulfate, carbonate, lactate, citrate, tartrate, caséinate et stéarate de calcium, et leurs mélanges, en particulier dans le groupe des sulfate, carbonate et stéarate de calcium, et leurs mélanges.

La solubilité du sel de calcium est obtenue par réaction avec des protons (acides) libérés in situ. Ils peuvent être générés par des réactifs type pyrophosphates ou deltagalactolactone au contact de l'eau.

Avantageusement, la phase aqueuse A comporte en outre un agent osmotique.

Cet agent osmotique peut être choisi dans le groupe des sucres, des sels, des polymères hydrosolubles de préférence de masse moléculaire inférieure à 150 kg/mole et de leurs combinaisons.

Un choix préférentiel d'agent osmotique peut être du sorbitol avec une teneur inférieure à 5 % en poids par rapport au poids de la solution aqueuse, c'est-à-dire de la phase aqueuse A (dans sa formulation complète) pour ne pas rendre indigeste le produit final. Une teneur entre 0,8 % et 1,5 % en poids de sorbitol est optimale. On peut aussi utiliser avantageusement du sel de Guérande qui permet aussi d'apporter des sels minéraux utiles.

De préférence, la teneur de la phase aqueuse A dispersée dans la matrice lipidique 18, et ainsi la teneur en particules gélifiées 16, est comprise entre 10 et 50 % en volume, et de préférence comprise entre 15 et 30 % en volume par rapport au volume total de la phase aqueuse A et de la matrice lipidique 18, c'est à dire par rapport au volume total du noyau 12 .

En-dessous de 10 % en volume, le volume de la phase aqueuse A n'est plus suffisant pour introduire de façon aisée les substances actives hydrosolubles et avoir une bonne homogénéité de composition des noyaux 12 des produits.

Au-delà de 50 % en volume, il devient beaucoup plus difficile de conserver une émulsion d'eau dispersée, c'est à dire les particules gélifiées 16, dans la phase lipidique 18.

La phase aqueuse A gélifiée peut comporter des substances actives hydrophiles telles que des acides aminés, des vitamines, des prébiotiques, des probiotiques, des antioxydants, et leurs combinaisons.

Un deuxième élément ou objet de ce premier produit 10 est que la phase aqueuse 16, c'est à dire les particules gélifiées 16, est dispersée dans une matrice ou phase lipidique 18.

Avantageusement, le deuxième objet ou élément du produit 10, la matrice lipidique 18, comporte au moins une huile végétale ou animale, notamment de poissons, et au moins une cire cristallisable. Les cires peuvent être d'origine animale (cire d'abeille) ou végétale.

De préférence, les cires utilisées sont des cires cristallisables de température de fusion inférieure à 90 degrés Celsius et très préférentiellement inférieure à 65 degrés Celsius.

Le taux de cires est avantageusement compris entre 5 et 25 % en poids par rapport au poids de l'ensemble de la matrice lipidique 18, et très avantageusement compris entre 10 et 20 %.

Selon des modes de réalisation préférentiels, la matrice lipidique 18 est de forme sensiblement sphérique et ainsi le noyau 12 est de forme sensiblement sphérique et de diamètre compris entre 10 et 1000 μm et de préférence entre 200 et 400 μm.

La matrice lipidique 18 peut avantageusement comporter des vitamines.

De préférence, cette matrice lipidique 18 comporte une forte teneur en oméga 6 et oméga 3, en particulier de types DHA et EPA.

La matrice lipidique 18 comprend avantageusement au moins 1 % en poids d'oméga 3 de types DHA et EPA par rapport au poids de la matrice lipidique 18. Elle comporte aussi de préférence moins de 30 % en poids d'oméga 3 de types DHA et EPA et très préférentiellement moins de 10 % en poids par rapport au poids de la matrice lipidique 18.

Selon une caractéristique essentielle, la phase lipidique 18 comporte une charge minérale exfoliée choisie dans le groupe des phyllosilicates, tels que les argiles, les talcs et les micas. La charge minérale exfoliée présente avantageusement une surface spécifique supérieure à 100 m$^2$/g, avantageusement comprise entre 100 m$^2$/g et 800 m$^2$/g, plus avantageusement comprise entre 200 et 500 m$^2$/g.

De préférence, le phyllosilicate est une smectite. Les smectites ont l'avantage, de par leur structure lamellaire avec un écartement entre les lamelles plus élevé que les autres phyllosilicates, de pouvoir être gonflés par des petites molécules avec des propriétés hydrophobes qui vont améliorer l'exfoliation des plaquettes argileuses et ainsi faciliter leur dispersion dans la matrice lipidique 18. Les micas et les talcs peuvent aussi être ainsi exfoliés, mais l'énergie qui serait nécessaire pour disperser les feuillets lamellaires dans la matrice lipidique serait beaucoup plus élevée.

Selon un mode de réalisation avantageux, la teneur de la charge minérale dans la matrice lipidique 18 est comprise entre 0,5 % et 35 % en poids et de préférence inférieure à 15 % en poids, c'est-à-dire comprise entre 0,5 % et 15 % en poids, par rapport au poids de la matrice lipidique 18.

La présence de cette charge minérale dans la matrice lipidique 18 a plusieurs avantages importants. Tout d'abord, la charge permet de maîtriser la densité et par conséquent la flottabilité des produits lorsqu'ils sont utilisés en aquaculture. Elle renforce aussi la résistance des produits à l'action de l'oxygène en réduisant fortement sa cinétique de diffusion dans le noyau 12 des produits et fait office de barrière pour limiter la fuite des petites molécules des nutriments et substances actives. Enfin, la très forte surface développée des feuillets de smectite permet de microstructurer la matrice lipidique 18 à l'échelle nanométrique ce qui permet de compartimenter et de jouer sur la cinétique de digestibilité de la matrice lipidique 18.

Le troisième élément de ce premier produit 10 est une phase protidique 11 gélifiée entourant la matrice lipidique 18, et ainsi entourant le noyau 12. Cette phase protidique 11 comporte des protides. Cette phase protidique 11 est avantageusement préparée à partir de protides dissous dans une phase aqueuse gélifiée A2.

Par « protide », on entend les acides aminés et tous leurs oligomères et polymères, notamment les oligopeptides, les polypeptides et les protéines.

La présence de cette phase protidique 11 a l'avantage de fournir à l'animal cible, en complément des substances actives, les acides aminés nécessaires à sa croissance, et de favoriser le caractère appâtant de l'aliment 10.

Avantageusement, le taux de protéines de cette phase protidique 11 est compris entre 6 et 95 % en poids par rapport au poids d'un extrait sec de la phase protidique 11. Préférentiellement, ce taux est compris entre 45 et 80 % en poids par rapport au poids d'un extrait sec de la phase protidique 11.

Au-delà de 95 % de taux de protéines, la gélification de la phase protidique 11 devient difficile, car les protéines bloquent les sites réactifs des polysaccharides. En dessous de 6 %, l'apport nutritif devient insuffisant pour des compléments alimentaires.

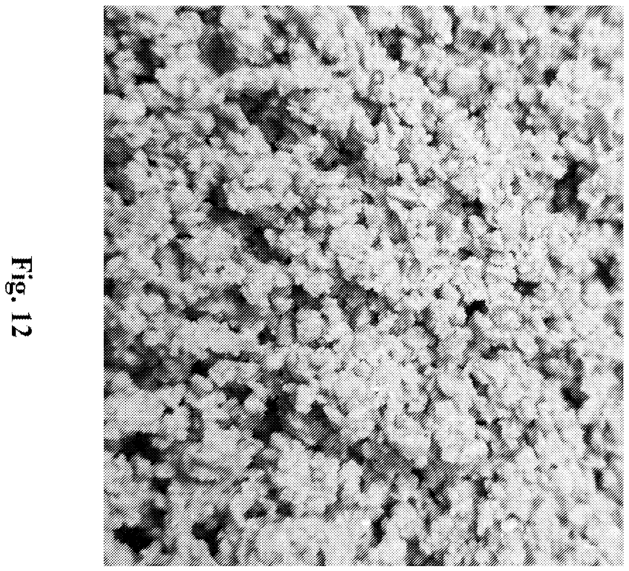

La phase protidique 11 telle que représentée à la figure 1 entoure un seul noyau 12 avec une géométrie sensiblement sphérique. Cependant, en fonction du procédé utilisé pour disperser dans la phase protidique 11 les noyaux 12, un même produit 10 peut comporter plusieurs noyaux 12 dispersés dans la phase protidique 11. En conséquence, la géométrie extérieure des produits 10 et de cette phase protidique 11 est très variable (voir figure 12).

De préférence, la phase protidique 11 comprend des polysaccharides chargés négativement et gélifiables, tels des alginates, de la pectine, du xanthane, de la gomme gellane... Ces polysaccharides sont avantageusement présents dans la phase aqueuse A2 et vont permettre sa gélification par réaction notamment du polysaccharide et de l'agent gélifiant. L'agent gélifiant permet également, avantageusement, une réticulation des polysaccharides entre eux

Les polysaccharides chargés négativement peuvent être fonctionnalisés avec une fonction carboxylique, sulfonate, alcoolate ou phosphate, seules ou combinées avec des charges positives (tels l'acide hyaluronique). La fonction carboxylique est préférée. Les conditions physico-chimiques seront ajustées de façon à avoir un excès de charges négatives favorisant les conditions de gélification.

Avantageusement, la phase protidique 11 gélifiée est réticulée par l'action d'un agent gélifiant libéré avec un temps de retard pouvant être un métal pouvant se complexer avec les fonctions par exemple carboxyliques des polysaccharides ou un oligomère minéral ou organique de charge opposée à la charge du polysaccharide cible, c'est-à-dire le polysaccharide présent dans la phase protidique 11.

La modulation du temps de retard de réticulation entre 15 minutes et plusieurs heures permet de favoriser un mélangeage en masse des ingrédients sans prise en masse du gel, et ainsi de mettre en forme l'aliment ou complément alimentaire 10.

L'agent gélifiant peut comporter des cations de calcium, de zinc, de magnésium ou de métaux de transition et une source de protons acides (tels que pyrophosphate ou deltagluconolactone) hydrolysable dans l'eau, permettant la libération de la forme ionique.

La phase protidique 11 gélifiée peut comprendre une teneur en polysaccharides gélifiables comprise entre 0,5 et 4,5 % en poids et de préférence inférieure à 2 % en poids par rapport au poids de la phase protidique 11 gélifiée pendant la préparation de cette phase protidique 11, c'est-à-dire avant la phase de séchage finale du produit 10.

De préférence, la phase protidique 11 gélifiée comprend une teneur en polysaccharides gélifiables comprise entre 2 et 20 % en poids et de préférence entre 2 et 10 % en poids par rapport au poids d'un extrait sec de la phase protidique 11 gélifiée.

À moins de 2 % en poids d'alginate dans la phase protidique 11, on constate que la gélification est insuffisante pour la stabilité du produit 10. Au-delà de 25 % en poids, par rapport au poids d'un extrait sec de la phase protidique 11, les polysaccharides tels que l'alginate jouent un rôle de laxatif en piégeant plus d'eau et les nutriments associés.

Avantageusement, les protéines de la phase protidique 11 comportent des protéines de taille inférieure à 30 kDa. La digestion de ces protéines peut ainsi se faire plus rapidement, car il y a moins de liaisons à couper pour amener les fragments de peptides à une taille assimilable par le tube digestif.

Selon un mode de réalisation avantageux, la phase protidique 11 comporte en plus une charge minérale dispersée, type silice, phyllosilicates, oxydes métalliques... La charge minérale est avantageusement dispersée dans la phase aqueuse gélifiée A2.

Cette charge minérale, par exemple argileuse, a l'avantage de permettre de moduler la flottabilité des produits 10. Elle constitue aussi une barrière qui s'oppose à la diffusion dans les produits 10 de l'oxygène. En effet, la très forte surface développée des feuillets de smectite permet de microstructurer la matrice protidique 11 à l'échelle nanométrique ce qui permet de compartimenter et de jouer sur la cinétique de digestibilité de la matrice protidique 11. Microstructure obtenue par les interactions entre les feuillets chargés positivement sur les côtés du feuillet et négativement sur la plus grande surface du feuillet avec le polysaccharide, tel que l'alginate, ou les protéines de la phase protidique 11.

La charge minérale est un phyllosilicate et très avantageusement une smectite.

Avantageusement, la phase protidique 11 comporte un agent osmotique.

Cet agent osmotique peut être choisi dans le groupe des sucres, des sels, des polymères hydrosolubles de préférence de masse moléculaire inférieure à 150 kg/mole et leurs combinaisons.

Un choix préférentiel peut être du sorbitol avec une teneur inférieure à 5 % en poids par rapport au poids de la solution aqueuse, c'est-à-dire la phase aqueuse gélifiée A2 (dans sa formulation complète), pour ne pas rendre indigeste le produit final 10. Une teneur entre 0,8 % et 1,5 % en poids est optimale. On peut aussi utiliser avantageusement du sel de Guérande qui permet aussi d'apporter des sels minéraux utiles.

Selon une autre caractéristique avantageuse, l'ensemble de la phase protidique 11 et du noyau 12 est de forme quelconque avec une plus grande dimension comprise entre 500 $\mu$m et 5 mm.

La taille des produits 10 selon l'invention peut aisément être adaptée à la cible visée, pour être compatible avec les capacités d'alimentation de cette dernière.

L'invention a aussi pour objet un aliment avec une teneur totale en protéines qui peut être comprise entre 20 et 70 % en poids par rapport au poids de l'ensemble du produit fini 10. Cette teneur est obtenue après la dernière étape optionnelle de séchage du produit 10. Les protéines sont essentiellement apportées par la phase protidique 11. En particulier, de 80% à 100% en poids, avantageusement de 90% à 100% en poids, des protéines de l'aliment sont apportées par la phase protidique 11.

L'invention a aussi pour objet un aliment avec une teneur totale en protéines avantageusement comprise entre 40 et 80 % en poids par rapport au poids d'un extrait sec de l'ensemble du produit fini 10. Les protéines sont essentiellement apportées par la phase protidique 11. En particulier, de 80% à 100% en poids, avantageusement de 90% à 100% en poids, des protéines de l'aliment sont apportées par la phase protidique.

L'invention a aussi pour autre objet un complément alimentaire avec une teneur totale en protéines qui peut être comprise entre 10 et 20 % en poids par rapport au poids de l'ensemble du produit fini 10. Cette teneur est obtenue après la dernière étape optionnelle de séchage du produit 10. Les protéines sont essentiellement apportées par la phase protidique 11. En particulier, de 80% à 100% en poids, avantageusement de 90% à 100% en poids, des protéines du complément alimentaire sont apportées par la phase protidique 11.

L'invention a aussi pour autre objet un complément alimentaire avec une teneur totale en protéines avantageusement comprise entre 3 et 40 % en poids par rapport au poids d'un extrait sec de l'ensemble du produit fini 10. Les protéines sont essentiellement apportées par la phase protidique 11. En particulier, de 80% à 100% en poids, avantageusement de 90% à 100% en poids, des protéines du complément alimentaire sont apportées par la phase protidique 11.

Les protéines de la phase protidique 11 sont prédigérées, au moins en partie, dans l'estomac de l'animal, mais la gélification de cette phase protidique 11 couplée avec l'enrobage 14 constitue une barrière physique au relargage de ces protéines prédigérées dans l'estomac. Il est intéressant de limiter un tel relargage de protéines prédigérées dans l'estomac car, chez les poissons, leur métabolisation dans l'estomac servirait à créer de l'énergie de digestion et motrice en entraînant des rejets de type ammoniaque issus de cette catabolisation, au lieu d'être métabolisées dans les intestins des animaux, là où leur absorption est la plus efficace pour la croissance de ces animaux.

Le quatrième élément de ce premier produit 10 est de comporter un enrobage 14 autour du noyau 12 et de la phase protidique 11.

Cet enrobage 14 peut comporter n couches C de matériaux biocompatibles M+ et M-, notamment de biopolymères, avec un empilement alterné de charges électrostatiques positives et négatives qui forment des coacervats structurés en empilement de couches, et n est au moins égal à 1.

Cet enrobage 14 peut comporter n couches C de matériaux biocompatibles M+ et M-, notamment de biopolymères, avec un empilement alterné de charges électrostatiques positives et négatives qui forment des coacervats réticulés et structurés en empilement de couches, n étant au moins égal à 2.

La ou les couche(s) C+ comprenant le matériau biocompatible à charges électrostatiques positives M+ comprennent un agent de réticulation R- choisi parmi les anions multichargés.

La ou les couche(s) C- comprenant le matériau biocompatible de charges électrostatiques négatives M- comprennent un agent de réticulation R+ choisi parmi les cations multivalents.

Ainsi, chaque couche C comprend un matériau biocompatible M à charges électrostatiques, c'est-à-dire un matériau biocompatible portant des groupements fonctionnels ionisables et ionisées dans les conditions physico-chimiques adaptées. Ces charges peuvent être des charges électrostatiques positives et alors le matériau biocompatible, noté M+, comprend des groupements fonctionnels cationiques, tels que par exemple des fonctions amines. Ces charges peuvent être des charges électrostatiques négatives et alors le matériau biocompatible, noté M-, comprend des groupements fonctionnels anioniques, tels que par exemple des fonctions acide carboxylique, sulfonate, alcoolate ou phosphate.

Chaque couche C comprend en plus du matériau biocompatible M un agent de réticulation R. Cet agent de réticulation comprend également des charges électrostatiques, de charges opposées à celle du matériau M. Cependant, la charge électrostatique totale de la couche C correspond à celle du matériau M. En effet, dans la couche C, le ratio (nombre de charges électrostatiques du matériau biocompatible, noté nM/ nombre de charges électrostatiques de l'agent de réticulation, noté nR) (soit nM/nR) est strictement supérieur à 1, avantageusement supérieur à 2, plus avantageusement supérieur ou égal à 5.

Ainsi, la couche comprenant le matériau M+, notée couche C+, comprend également un agent de réticulation comprenant des charges négatives, noté R-. La couche C+ est globalement chargée positivement. En effet, dans la couche C+, le ratio (nombre de charges électrostatiques positives du matériau biocompatible, noté nM+/ nombre de charges électrostatiques négatives de l'agent de réticulation nR-) (soit nM+/nR-) est strictement supérieur à 1, avantageusement supérieur à 2, plus avantageusement supérieur ou égal à 5.

Ainsi, la couche comprenant le matériau M-, notée couche C- comprend également un agent de réticulation comprenant des charges positives, noté R+. La couche C- est globalement chargée négativement. En effet, dans la couche C-, le ratio (nombre de charges électrostatiques négatives du matériau biocompatible, noté nM-/ nombre de charges électrostatiques positives de l'agent de réticulation nR+) (soit nM-/nR+) est strictement supérieur à 1, avantageusement supérieur à 2, plus avantageusement supérieur ou égal à 5.

Dans chaque type de couche C, la modulation du ratio nM/nR, soit nM+/nR- ou nM-/nR+, permet de moduler la rigidité de l'enrobage 14. A titre d'exemple, lorsque l'agent de réticulation est ajouté en une teneur permettant d'avoir un ratio nM/nR de 5/1 on obtient un enrobage très rigide et lorsque l'agent de réticulation est ajouté en une teneur permettant d'avoir un ratio nM/nR de 100/1, on obtient un maillage beaucoup plus souple.

Le ratio nM/nR varie avantageusement de 2/1 à 300/1, plus avantageusement de 5/1 à 150/1.

Ce système d'enrobage 14 a l'avantage de faciliter la modulation de l'épaisseur de la couche d'enrobage 14 et le large choix de matériaux biocompatibles, en particulier de biopolymères, M+ et M-, permet de moduler le maillage de matériaux biocompatibles, en particulier de biopolymères à la surface, qui est aussi rigidifié par des réticulations plus ou moins fortes de ce maillage. La modulation de la rigidité de l'enrobage 14 permet de moduler le relargage des substances nutritives et/ou physiologiquement actives : plus la rigidification est dense, plus le maillage de biopolymères est réduit et plus le relargage est ralenti. Ce type d'enrobage 14 réticulé et structuré en multicouches C permet également d'obtenir une stabilité structurelle nécessaire à la conservation de l'aliment 10 jusqu'à sa consommation et la libération de substances nutritives et/ou physiologiquement actives, et notamment nécessaire à sa manipulation.

L'agent de réticulation R+ est choisi parmi les cations multivalents. Avantageusement, les cations multivalents sont choisis dans le groupe des alcalino-terreux, des métaux de transition et des métaux pauvres.

Très avantageusement, les cations multivalents sont choisis dans le groupe des cations de calcium, magnésium, manganèse, fer, cuivre, zinc, aluminium et leurs combinaisons.

Il est à noter que les cations multivalents peuvent être apportés par des sels comprenant alors également un anion. Ce qui importe est que le composé utilisé permette la libération d'un cation qui va pouvoir réagir avec les charges négatives du matériau biocompatible M- et ainsi contribuer à la réticulation de la couche C-.

L'agent de réticulation R- est choisi parmi les anions multichargés. On entend par « anion multichargé » un composé chimique comprenant plusieurs groupements fonctionnels chargés négativement. Le groupement fonctionnel peut être monovalent ou multivalent. Selon un mode de réalisation préférentiel, les anions multichargés sont des polyphosphates. De préférence, l'agent de réticulation R- est choisi parmi le trimétaphosphate de sodium (SMTP), l'hexamétaphosphate de sodium et leur mélange, de préférence le trimétaphosphate de sodium (SMTP).

Avantageusement, dans chaque couche C+, le matériau biocompatible M+ est un biopolymère, en particulier choisi parmi les polysaccharides chargés positivement, avantageusement choisi parmi les polypeptides, le chitosan, les dérivés de la chitine, gommes utilisées comme agent texturant fonctionnalisés amine tels que la gomme de guar fonctionnalisée, et leurs mélanges. Plus avantageusement, le matériau biocompatible M+ est choisi parmi le chitosan.

Avantageusement, dans chaque couche C+, le biopolymère M+ est le chitosan et l'agent de réticulation R- est avantageusement le trimétaphosphate de sodium (SMTP).

Avantageusement, dans chaque couche C-, le matériau biocompatible M- est un biopolymère, en particulier choisi parmi les polysaccharides chargés négativement, avantageusement choisi parmi les polypeptides, la pectine, la gomme arabique, la xanthane, les alginates, les carraghénanes, les dérivés cellulosiques, et leurs mélanges. Plus avantageusement, le matériau biocompatible M- est choisi parmi les alginates, la pectine et leurs mélanges.

Avantageusement, dans chaque couche C-, le biopolymère M- est choisi parmi les alginates ou la pectine, et l'agent de réticulation R+ est avantageusement choisi parmi les cations calcium.

Avantageusement, dans chaque couche C+, l'agent de réticulation R- est introduit à une teneur spécifique permettant d'obtenir un ratio nM+/nR- compris entre 5/1 et 150/1. En particulier, dans chaque couche C+, l'agent de réticulation R- est introduit à une teneur comprise entre 0,5 g et 2 g pour 1 g de M+ pour les forts taux de réticulation, et entre 15 et 70 mg pour 1g de M+ pour les faibles taux de réticulation +.

Avantageusement, dans chaque couche C-, l'agent de réticulation R+ est introduit à une teneur spécifique permettant d'obtenir un ratio nM-/nR+ compris entre 5/1 et 150/1. En particulier, dans chaque couche C-, l'agent de réticulation R+ est introduit à une teneur comprise entre 0,5 g et 2 g pour 1 g de M- pour les forts taux de réticulation et entre 15 à 70 mg pour 1g de M-.

Avantageusement, les couches C comprennent ainsi des liaisons entre le matériau M et l'agent de réticulation R par complexation métallique pour la couche C- ou pontage chimique pour la couche C+.

n est un nombre entier. n est avantageusement inférieur ou égal à 15, plus avantageusement compris entre 2 et 15, et de préférence compris entre 2 et 10.

Ce nombre de couches C variable est adapté pour obtenir un bon compromis entre qualité de l'encapsulation et relargage contrôlé dans le tube digestif tout en permettant une mise en oeuvre aisée.

La couche extérieure de cet enrobage 14 est de préférence constituée d'un polymère chargé positivement, c'est-à-dire d'une couche C+, car cela a des propriétés antibactériennes et ainsi on améliore la conservation de l'aliment ou du complément alimentaire.

La mise en oeuvre de deux chimies de réticulation, complexation métallique et pontage chimique, pour l'enrobage 14 permet d'avoir un déclencheur de libération des nutriments en fonction de l'avancement dans le cycle de digestion. Ainsi, on favorise la digestion des protéines grâce à la libération en milieu acide des ions métalliques multivalents (qui sont complexés avec les donneurs d'électrons) ce qui augmente la perméabilité de l'enrobage 14 à l'acide présent dans l'estomac, tout en retardant le relargage du digesta, car la couche de polycations reste réticulée par les ponts phosphoramides obtenus par l'action du trimétaphosphate de sodium (SMTP). Ces derniers points de réticulation sont ensuite libérés par l'action des enzymes phosphatases alcalines secrétés usuellement par le foie et déversés dans le tube digestif par la bile. L'aliment ou le complément alimentaire libère ainsi ses nutriments pré-digérés dans le tube digestif avec une cinétique plus lente, favorisant l'efficacité d'absorption et les voies métaboliques les plus favorables à la performance zootechnique des animaux cibles.

Avantageusement, le noyau 12 et/ou la phase protidique 11 comportent) également un polymère chargé, ou des protéines avec des charges de surface ou des tensioactifs cationiques, anioniques ou zwitterioniques.

On peut aussi ajouter spécifiquement des biopolymères chargés au noyau 12 et/ou la phase protidique 11 pour générer ces charges. Ils seront choisis parmi des biopolymères anioniques, ou cationiques cités ci-dessus, mais peuvent également combiner les charges comme dans l'acide hyaluronique.

Cela permet de moduler les charges résiduelles ou libres par l'ajustement des conditions de pH du milieu ou par l'ajustement de l'équilibre stoechiométrique des systèmes de complexation dans la phase protidique 11.

Le système physico-chimique est ainsi ajusté de façon à obtenir un excédent d'amines libres issues des protéines de la phase protidique 11 qui seront chargées positivement dans des conditions de pH inférieures à 9. Cet excédent de charges positives est la condition nécessaire pour déposer la première couche de biopolymère anionique C-de l'enrobage 14.

Le cas échéant, si le système physico-chimique de la couche protidique 11 présente plutôt un excédent de charges négatives, liés à l'équilibre des ingrédients qui la constitue, l'enrobage 14 débutera par une première couche de biopolymères cationiques C+.

L'enrobage 14 de la phase protidique 11 et/ou du noyau 12 peut aussi comporter une couche de matériaux de renfort MR.

Ces matériaux de renfort MR peuvent être choisis dans le groupe des argiles, des silices et des fibres chargées, et leurs combinaisons.

Ces matériaux de renfort MR présentent une dominante de charges électrostatiques négatives à leurs surfaces et sont ainsi attirées par les charges positives de surface de l'enrobage 14, couche C+. On peut ainsi mettre en place une couche de renfort entre deux couches de biopolymères cationiques C+.

De préférence, les matériaux de renfort MR sont un phyllosilicate et très préférentiellement une smectite.

L'utilisation de matériaux de renfort de haute surface spécifique, c'est-à-dire une surface spécifique supérieure à 100 $m^2$/g, permet de favoriser l'interaction avec les macromolécules du coacervat ce qui renforce leur intercalation dans l'enrobage 14, tout en développant une grande surface d'interaction avec les molécules entrantes (oxygène, molécules oxydantes) ou sortantes (nutriments) tout en augmentant le libre parcours moyen ce qui se traduit par un ralentissement de la cinétique d'oxydation des nutriments et une meilleure encapsulations des petites molécules.

Cet enrobage 14 est donc constitué de couches de biopolymères C+ et C-, avantageusement de polysaccharides, chargés alternativement positivement ou négativement. Dans l'estomac de l'animal, le pH est acide et c'est le maillage des biopolymères chargés positivement, couche C+, qui est le plus résistant à ce pH acide et qui assure l'intégrité de l'enrobage 14.

Les couches C- de l'enrobage sont avantageusement pontées par des cations tels Ca++. Ces ponts sont dissous en milieu acide, donc lorsque l'on arrive en milieu neutre à basique (les intestins) on a une véritable libération de l'ensemble des couches de l'enrobage 14. Dès qu'il y a une brèche dans l'enrobage 14 les enzymes de la bile vont pouvoir pénétrer jusqu'au noyau 12 et entraîner la libération des lipides ainsi que de leurs nutriments et substances actives, conduisant très rapidement aussi à la libération des particules 16 de la phase aqueuse ainsi que de leurs nutriments et substances actives. Cet enrobage 14 assure donc la libération rapide de tous les nutriments et substances actives dans la zone des intestins des animaux monogastriques, là où leur absorption lors de leur parcours est la plus efficace possible.

Ce produit 10 est conçu pour apporter un équilibre nutritionnel chez des animaux en pleine croissance, qui doivent faire face aux pathogènes et au stress du milieu d'élevage. Ainsi ce produit 10 est recommandé, sous forme d'aliment ou de complément alimentaire dans le stade juvénile des espèces monogastriques présentant une mortalité importante : tels que dans l'élevage aviaire par exemple pour les poussins, ou en aquaculture pour les alevins. La flexibilité de formulation et de modulation des propriétés, en fait également un produit intéressant pour accompagner la finition des animaux pré-commerciaux.

La figure 2 présente un deuxième produit 20 comportant une phase lipidique 18 comportant une charge minérale selon l'un des objets de l'invention.

Ce deuxième produit 20 est similaire au premier produit 10 mais a une structure simplifiée : il ne comprend pas de phase protidique entre le noyau 12 et l'enrobage 14. Il comprend comme le produit 10 un noyau 12 comportant une phase aqueuse composée de particules aqueuses 16 dispersées dans une matrice lipidique 18 et un enrobage 14.

Ce deuxième produit est particulièrement intéressant pour fournir des nutriments ou substances actives spécifiques.

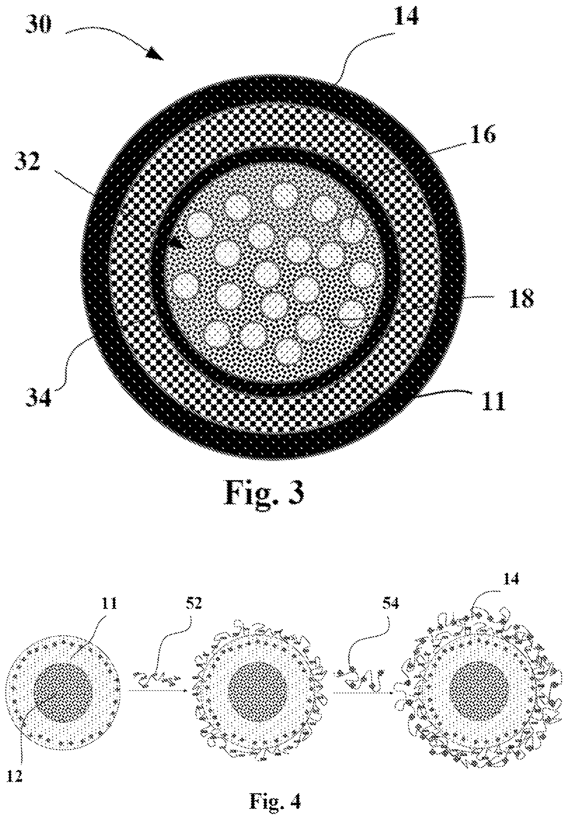

La figure 3 présente un troisième produit 30 similaire au premier produit 10 de la figure 1. Le troisième produit 30 comporte aussi une phase lipidique 18 comportant une charge minérale selon l'un des objets de l'invention.

Ce troisième produit 30 comporte en plus, par rapport au premier produit 10, un revêtement ou enrobage 34 de la matrice lipidique 18 disposé entre cette matrice lipidique 18 et la phase protidique 11.

Comme l'enrobage 14 du produit 10, ce revêtement 34 comporte n couches C' de matériaux biocompatibles M, avec un empilement alterné de charges électrostatiques positives et négatives formant des coacervats structurés en empilement de couches, n étant au moins égal à 1. De préférence, le nombre de couches n est compris entre 2 et 10. n est un nombre entier. Les couches C' répondent aux mêmes définitions que les couches C décrites précédemment. Les matériaux biocompatibles M sont tels que décrits précédemment pour l'enrobage 14.

Plus particulièrement, ce revêtement 34 comporte n couches C' de matériaux biocompatibles avec un empilement alterné de charges électrostatiques positives et négatives qui forment des coacervats réticulés et structurés en empilement de couches, n étant au moins égal à 2. Ce revêtement 34 comprend ainsi au moins une couche C'+ répondant à la même définition que la couche C+ décrite précédemment pour le revêtement 14 et au moins une couche C'- répondant à la même définition que la couche C- décrite précédemment pour le revêtement 14. De préférence, le nombre de couches n est compris entre 2 et 10. n est un nombre entier. Les matériaux biocompatibles M sont tels que décrits précédemment pour l'enrobage 14, c'est à dire tels que décrits pour M+ et M-.

Cet ajout du revêtement 34 permet si nécessaire de retarder le relargage des composants actifs de la phase interne du noyau 12. La couche extérieure de ce revêtement 34 est de préférence constituée d'un polymère chargé positivement, couche C+, car cela a des propriétés antibactériennes et ainsi on améliore la conservation de l'aliment ou du complément alimentaire.

Cette troisième architecture permet de répondre à des exigences de relargage encore plus tardif dans le tube digestif du noyau, comme le relargage des prébiotiques ou des probiotiques qui doivent rester intègres jusqu'à la phase terminale du tube digestif.

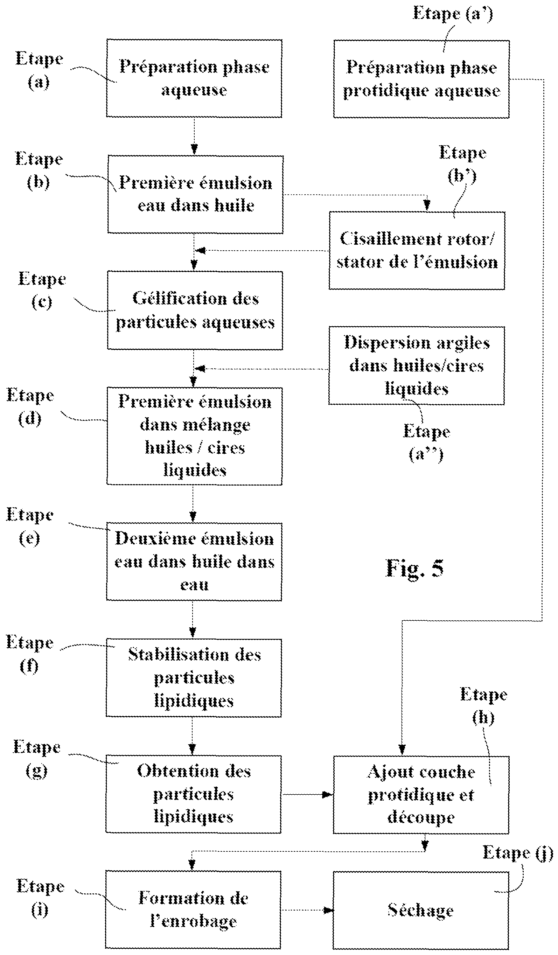

La figure 5 présente les différentes étapes d'un procédé de fabrication du premier produit 10.

Le ou les noyaux 12 du premier produit 10 sont préparés à partir d'une double émulsion eau dans huile dans eau suivie d'une filtration ou décantation. Ensuite ce noyau 12 est complété par une phase protidique 11 qui sera mise en forme à la taille et à la géométrie cible. On réalise ensuite un enrobage 14. La dernière étape, optionnelle, de préparation des produits est un séchage pour amener le taux d'humidité des produits 10 à une valeur inférieure à 10 % en poids, par rapport au poids total du produit 10. Ce séchage est effectué à basse température, de préférence inférieure à 50 °C, par exemple comprise entre 18°C et 40°C.

L'étape (a) consiste à préparer une phase aqueuse en dispersant dans de l'eau les substances actives hydrosolubles nécessaires et en ajoutant les réactifs de gélification. Ces réactifs sont tels que décrit précédemment pour la phase aqueuse A gélifiée, et peuvent être un polysaccharide, un sel de calcium, notamment du sulfate de calcium ou du carbonate de calcium, en présence de pyrophosphate ou de deltagluconolactone.

L'étape (a') consiste à préparer une phase protidique 11 gélifiée en dispersant des protéines dans de l'eau avec des réactifs de gélification, optionnellement un agent osmotique et optionnellement des charges minérales telles que des phyllosilicates.

À l'étape (b), on injecte la phase aqueuse issue de l'étape (a) dans une huile végétale ou animale pour obtenir une première émulsion de particules aqueuses dans l'huile.

Puis, à l'étape (c), on laisse reposer ou on chauffe modérément, à moins de 100°C et idéalement à moins de 60°C, par exemple de 40°C à 60°C, cette première émulsion pour achever les réactions de gélification des particules aqueuses et obtenir des particules aqueuses gélifiées robustes dispersées dans l'huile (étape (c)).

La première émulsion issue de l'étape (c) est alors ajoutée à un mélange d'au moins une huile animale ou végétale et d'au moins une cire liquide préparé au préalable. Le mélange huile + cire comprend avantageusement de 1 à 50% en poids de cire par rapport au poids total du mélange, plus avantageusement de 5 à 15% en poids de cire. Pour que la ou les cires cristallisables utilisées soient liquides, la température du mélange est supérieure à la température de fusion des cires (étape (d)).

À l'étape (e), on introduit l'ensemble de la première émulsion et du mélange d'au moins une huile et d'au moins une cire liquide, issu de l'étape (c), dans une solution aqueuse sous agitation pour obtenir une deuxième émulsion ; cette deuxième émulsion comporte les particules aqueuses gélifiées de la première émulsion dispersées dans une matrice lipidique qui est elle-même sous forme de particules dispersées dans la solution aqueuse.

On refroidit à l'étape (f) cette deuxième émulsion issue de l'étape (e) jusqu'à une température inférieure à la température de solidification des cires cristallisables présentes pour stabiliser les particules lipidiques.

Il reste à l'étape (g) à isoler les noyaux ou particules lipidiques des produits par filtration ou décantation en éliminant la phase aqueuse.

Après l'étape (g), on disperse les particules lipidiques issues de l'étape (g) dans la phase protidique 11 en cours de gélification préparée à l'étape (a'). L'homogénéisation est faite avec le minimum de cisaillement, le cisaillement obtenu par exemple par un brassage à la main (étape (h)). La dispersion est ensuite, par exemple, introduite dans une extrudeuse à froid pour mettre en forme le produit au travers d'une filière. A la sortie de la filière, on coupe en continu l'extrudat avec une lame rotative à la dimension cible et on obtient des ensembles constitués de noyaux 12 enrobés d'une phase protidique 11 prêts à être enrobés.

On peut aussi réaliser cet ajout de la phase protidique 11 en lit fluidisé ou en sphéronisation.

Les procédés choisis, extrusion, lit fluidisé, sphéronisation, sont mis en oeuvre à basse température, inférieure à 50 °C (étape (h)), par exemple allant de 18°C à 50°C.

Remarque : la cinétique de gélification de la phase protidique 11 est ajustée pour permettre d'effectuer l'ensemble des opérations de l'étape (h). La gélification n'est achevée à l'issue de l'étape (h) qu'après un temps de repos permettant la solidification de la couche.

Il est à noter qu'en raison de leur mode de fabrication par préparation d'émulsions, les phases aqueuses 16 et les particules lipidiques 18 ont une géométrie relativement sphérique. En revanche, les ensembles constitués de la phase protidique 11 entourant la phase lipidique 18 des produits 20 qui sont obtenus par découpe d'un extrudat issu d'une filière peuvent prendre des formes quelconques.

Enfin, à l'étape (i) on forme l'enrobage 14 des ensembles constitués de la phase protidique 11 entourant la phase lipidique 18 issus de l'étape (h) par immersions dans un bain aqueux dans lequel on apportera alternativement des solutions de matériaux biocompatibles cationiques M+ et anioniques M-.

Après l'enrobage de l'étape (i), les produits sont avantageusement séchés par flux d'air à basse température inférieure à 50°C et de préférence entre 18 et 40°C pour amener le taux d'humidité à une valeur inférieure à 10 % en poids, par rapport au poids total du produit. Cela permet d'augmenter la durée de conservation des produits. Cette dernière étape (j) est optionnelle.

La figure 4 illustre cette formation de l'enrobage 14 des ensembles constitués de la phase protidique 11 entourant la phase lipidique 18 issus de l'étape (g) par ajouts successifs de biopolymères, avantageusement des polysaccharides, chargés positivement M+ et négativement M-.

Remarque : la représentation de la phase protidique 11 de la figure 4 a été modifiée par rapport à celle des autres figures pour une question de clarté.

Remarque : l'ensemble est ici schématisé sous la forme d'une particule mais il peut avoir une forme quelconque

À gauche de la figure 4, on voit l'ensemble constitué d'un noyau 12 du premier produit 10 entouré d'une phase protidique 11. Cette couche protidique 11 comprend des charges libres de surface, positives ou négatives.

Cet ensemble est enrobé par l'addition d'une solution aqueuse de biopolymères chargés négativement 52 (M-), par exemple des polysaccharides.

Par interactions électrostatiques, le biopolymère chargé négativement M- va recouvrir la surface de l'ensemble pour former une couche négative C- de coacervat.

On ajoute ensuite dans la dispersion avec les particules chargées maintenant négativement en surface, une solution aqueuse de biopolymère chargé positivement 54 M+. Celui-ci va alors spontanément recouvrir la couche C- précédemment disposée.

On renouvelle l'opération en alternant les solutions aqueuses de biopolymères chargés positivement M+ et négativement M- jusqu'à obtenir un enrobage 14 comportant le nombre n de couches C désiré. Usuellement n est compris entre 2 et 10.

Avantageusement, à l'étape (e), la solution aqueuse continue dans laquelle est fabriquée la deuxième émulsion (émulsion de lipides avec de la cire) comporte au moins un agent osmotique et au moins un agent tensioactif.

L'agent osmotique peut être choisi dans le groupe des sucres, des sels, des polymères hydrosolubles de préférence de masse moléculaire inférieure à 150 kg/mole, et leurs combinaisons.

Un choix préférentiel peut être du sorbitol avec une teneur inférieure à 5 % en poids par rapport au poids de la solution aqueuse continue pour ne pas rendre indigeste le produit final. Une teneur entre 0,8 et 1,5 % en poids de sorbitol est optimale. On peut aussi utiliser avantageusement du sel de Guérande qui permet aussi d'apporter des sels minéraux utiles.

La présence d'un agent osmotique a l'avantage de mettre en place une barrière osmotique qui empêche le passage des substances actives présentes dans la phase aqueuse de la première émulsion qui contient également un agent osmotique, de même nature ou différent de celui de la phase continue externe, avantageusement parmi ceux décrits précédemment ; cette phase aqueuse interne étant elle-même dispersée dans la phase lipidique. L'agent osmotique permet de garantir un équilibre des pressions osmotiques. Cela évite un effet de pompage des nutriments à travers la paroi lipidique.

La phase protidique 11 comporte aussi un agent osmotique, de même nature ou différent de celui de la phase continue externe, avantageusement parmi ceux décrits précédemment. Cela renforce l'efficacité de la barrière osmotique.

Très avantageusement, l'agent tensioactif est choisi dans le groupe des phospholipides, des polymères tel que carboxyméthylcellulose (CMC), l'acide hyaluronique, les polylysines, des protéines telle la caséine ou les hydrolysats de protéines végétales ou animales, des surfactants, et leurs combinaisons.

La figure 5 présente aussi une étape additionnelle et optionnelle (a") dans laquelle on réalise une dispersion d'une phase minérale telle des argiles dans au moins une partie du mélange d'au moins une huile et d'au moins une cire liquide d'huiles animales ou végétales et de cires liquides utilisé à l'étape (d). Comme précédemment indiqué, ces argiles sont de préférence des phyllosilicates et très préférentiellement des smectites.

Pour faciliter l'exfoliation des feuillets des argiles dans ce milieu lipidique, la dispersion est réalisée en présence d'un agent de surface, qui a, de préférence, une tête polaire avec une fonction cationique.

On peut avantageusement utiliser de la lécithine, de la betaïne, de la polylisine, ainsi que leurs combinaisons.

La figure 5 présente aussi une autre étape additionnelle et optionnelle (c') dans laquelle, après avoir obtenu la première émulsion de particules aqueuses dans l'huile (étape (b)), on la soumet à un fort cisaillement tel que rotor/stator pour homogénéiser et réduire la taille de ces particules aqueuses avant leur gélification complète. Ce cisaillement est de préférence compris entre 2 000 et 20 000 min$^{-1}$.

La fabrication du deuxième produit 20 est similaire à celle du produit 10, il suffit de réaliser un enrobage directement après avoir obtenu les particules lipidiques à l'étape (g).

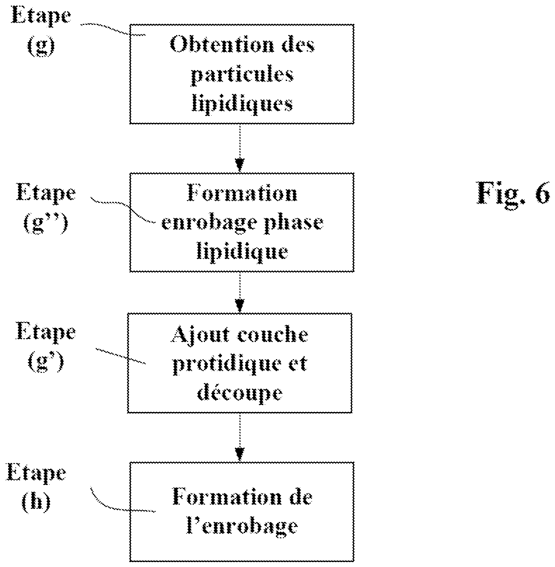

La figure 6 présente les étapes additionnelles pour la préparation du troisième produit.

Après l'étape (g) qui permet d'obtenir les particules lipidiques 18 par filtration ou décantation, on forme un enrobage 34 de ces particules lipidiques 18 par ajouts successifs de solutions de biopolymères, avantageusement de polysaccharides, chargés positivement M+ et négativement M- (étape (g')). Le dernier ajout est de préférence celui d'un biopolymère chargé positivement M+. Les étapes pour former cet enrobage 34 sont telles que décrites précédemment pour l'étape (i).

Ensuite, on disperse les particules lipidiques 18 enrobées ainsi obtenues suite à l'étape (g') dans une phase protidique 11, et l'ensemble est mis en forme par extrusion à froid. L'ajout des particules dans la phase protidique 11 peut aussi se faire par dépôt en lit fluidisé ou en sphéronisation. On obtient des cylindres ou des géométries (selon la filière utilisée) de phase protidique 11 dans laquelle se trouvent dispersées les particules lipidiques 18. Il faut ensuite découper, par exemple avec une lame rotative ces extrudats pour obtenir les ensembles des noyaux 32 enrobés de l'enrobage 34 dispersés dans une phase protidique 11 des troisièmes produits (étape (h)).

Il reste à réaliser l'enrobage 14 pour obtenir ces troisièmes produits 30. Cet enrobage 14 est réalisé comme précédemment décrit.

Une dernière étape de séchage optionnelle peut alors être réalisée comme précédemment décrit sous un flux d'air à température basse, de préférence inférieure à 50 °C, par exemple entre 18 et 40°C, jusqu'à avoir un taux d'humidité inférieur à 10% en poids, par rapport au poids total du produit.

**Caractérisation des charges minérales (argiles) exfoliés**

**Diffusion des rayons X aux petits angles (SAXS)**

La diffusion des rayons X aux petits angles, Small Angle X-ray Scattering (SAXS) est une technique permettant d'avoir des informations sur la structure du matériau, à des échelles allant d'environ 1 à 100 nm. Des échelles de l'ordre du micron peuvent également être sondées en USAXS. Par ailleurs, cette technique permet l'étude de milieux concentrés. Cette technique consiste à envoyer un faisceau de rayons X sur un échantillon et de mesurer la répartition spatiale de la diffusion produite par l'échantillon. L'intensité mesurée est alors fonction de l'organisation structurale du matériau, plus précisément, du contraste de phase. Elle est proportionnelle à la différence de densité électronique.

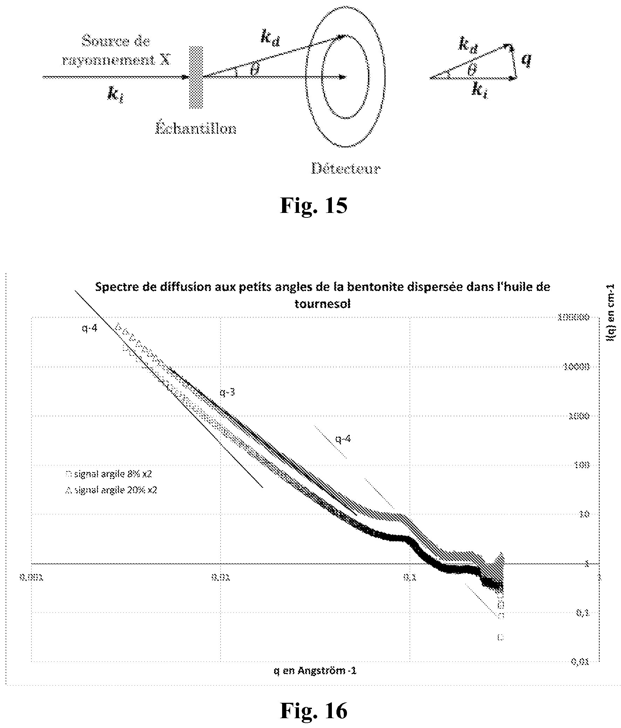

Un faisceau de rayons X illumine un échantillon à analyser. Les photons du faisceau interagissent avec les nuages électroniques des atomes de l'échantillon et sont diffusés par l'échantillon. Un détecteur, placé derrière l'échantillon, permet de mesurer l'intensité diffusée en fonction de l'angle de diffusion (cf. Figure 15).

La direction de l'angle de diffusion θ est également appelée vecteur de diffusion (q). La dimension de l'échelle étudiée est inversement proportionnelle au vecteur de diffusion. L'échelle observée est d'autant plus grande que le vecteur de diffusion est petit.

L'intensité diffusée s'écrit en fonction de la forme des objets (facteur de forme P(q)) et la corrélation des objets (facteur de structure S(q)) comme suit :

$$I(q) = \alpha.\varphi.(\Delta\rho)^2 .P(q).S(q)$$

avec : $\alpha$ : constante (-) ; $\varphi$ : fraction volumique de l'échantillon ; $\Delta\rho$ : différence de contraste entre les objets et le solvant.

**Appareillage :**

L'appareil utilisé pour les analyses est un Xeuss 2.0, opéré au Laboratoire Léon Brillouin du CEA (Saclay, France). Il utilise une source alpha de CuK microfocalisée ; de longueur d'onde 1,54 Angström et de puissance 8keV. Le détecteur 2D est un Pilatus 3 1M de chez Dectris (Suisse).

Deux configurations permettent de couvrir une large gamme de vecteur de diffusions 0.003 Angstrom-1 <q<1 Angstrom-1, en positionnant le détecteur à 2,494m (faisceau de $0.3\times0.3mm^2$), puis à 0,539m (faisceau de $0.8\times0.8mm^2$). Les signaux sont normalisés pour obtenir des intensités en cm-1 et être quantitatif dans les analyses qui sont menées.

**Préparation des échantillons :**

L'exfoliation efficace de la bentonite en milieu lipidique (l'huile de tournesol a été utilisée pour les expériences SAXS) nécessite de suivre un protocole qui favorise les trois étapes importantes du processus de dispersion de ces argiles :

- (1) Le pré-gonflement des feuillets de phyllosilicate
- (2) L'adsorption d'une molécule hydrophobe à la surface des particules de phyllosilicates, pour la rendre compatible avec la phase lipidique de dispersion
- (3) L'apport d'énergie de cisaillement pour séparer les particules de phyllosilicates dans la phase continue lipidique.

L'étape (1) est obtenue par l'apport d'eau en quantité suffisante pour imprégner les feuillets. Les Protocoles suivis préconisent d'utiliser au moins 10% d'eau par rapport à la quantité de bentonite engagée, cette quantité pouvant être augmentée pour augmenter la qualité de l'exfoliation, les échantillons préparés pour la caractérisation par SAXS ont été pré-gonflés avec 0.5g d'eau pour 1g de bentonite.

L'étape (2) est obtenue par l'utilisation de la lécithine comme agent exfoliant, qui va s'adsorber en surface par interaction ionique. Pour les caractérisations SAXS 0,3g de lécithine ont été utilisés pour 1g de bentonite. Elle est pré-dissoute dans l'eau de l'étape 1 pour faciliter son incorporation.

L'étape (3) peut être obtenue par différents moyens de cisaillement ou de dispersion efficaces. Les échantillons SAXS ont été obtenus par dispersion de la bentonite pré-imprégnée (étape (1) et (2)) dans de l'huile de tournesol. Le volume minimal de préparation étant de 200mL, un cisaillement a été appliqué en batch, à température ambiante, dans un entrefer de 150μm avec un mobile de 30mm, à 4000rpm pendant 5 min.

Pour les besoins de l'expérience une solution à 20%w et de 8%w de bentonite ont été préparées dans de l'huile de tournesol.

**Résultats et interprétations** :

Les solutions de bentonite à 20%w et 8%w ont été mesurées au SAXS, et les spectres de la figure 16 ont été obtenus.

Les spectres mesurés montrent une organisation multi-échelle de la bentonite. Les signaux sont bien proportionnels à la quantité de bentonite dispersée, et présentent la même allure. On observe des épaulements à grands q, pouvant être interprété comme une distance caractéristique du matériau (pics de structures) correspondants à une distance caractéristique de 63 Angstrôm ($2 \times \pi / q$) pour le premier épaulement et 28 Angstrôm pour le second épaulement. Ce qui peut être caractéristique d'une distance interfeuillet dans des amas de bentonite gonflés ou non. Nous pouvons interpréter ces épaulements, en disant que la quantité d'eau apportée dans la préparation des échantillons n'a pas permis de gonfler la totalité de la bentonite, et qu'il subsiste des particules de bentonite gonflées non totalement exfoliées dans l'échantillon.

La remontée à petit vecteur de diffusion (q->0) est le signal caractéristique d'une structure fractale, tendant vers une pente en q-4, ce qui permet d'envisager une première taille d'objets macroscopique dont la dimension peut être estimé de l'ordre d'une cinquantaine de nanomètres (début de signal de Guinier en I(q) $\alpha$ exp(-$q^2Rg^2/3$)).

Pour 0.008<q<0.08 une pente en $q^{-3}$ confirme la structuration fractale de la bentonite, qui s'organise à la fois sous forme d'amas compactes (donnant usuellement des signaux en $q^{-4}$) et des structures allongées ou des chemins de connexions (chemins de percolation) entre les amas donnant un signal en $q^{-2}$. La combinaison de ces deux signaux justifie la dimension fractale en $q^{-3}$, que l'on appellera agrégat fractal.

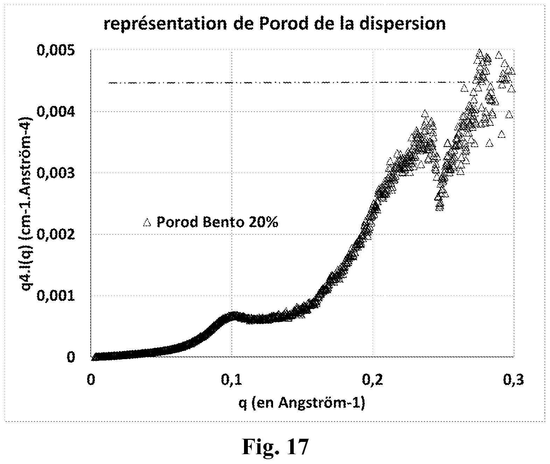

Par ailleurs les données SAXS des dispersions de bentonite en représentation de Porod $Iq^4$ = f(q) favorisant la lecture du signal à grand vecteur de diffusion (grand q) permet d'avoir également une approche plus quantitative, en déterminant la surface spécifique (cf. Figure 17).

Cette représentation est communément utilisée pour étudier un milieu à deux phases et évaluer ses propriétés interfaciales. Dans le cas modèle d'agrégats fractals, le plateau de Porod caractérise la surface diffusante des agrégats. Dans le cas présent, nous pouvons évaluer dans cette représentation la surface nette diffusante des agrégats de bentonite tels qu'ils sont organisés dans la phase lipidique. Nous nous focalisons sur le signal de la bentonite à 20%w, car les signaux sont parfaitement parallèles avec la bentonite à 8%w (cf. Figure 17).

Les deux régimes caractéristiques d'un spectre en représentation de Porod, avec une variation croissante de l'intensité dans l'ordre de vecteurs de diffusion croissant suivie d'un plateau, qui se dessine vers 0,3 angström-1. Les vecteurs de diffusion à partir desquels $Iq^4$ est constant est ici perturbé par une oscillation provoquée par la présence du pic de structure à 28 Angström décrit dans le spectre précédent. Cependant on peut projeter le signal du Porod à $4,41.10^{-3}$ cm-1 lorsque q tend vers 0,3 Angström-1.

L'apparition du plateau de Porod à partir de q = 0,25 Angström-1 permet de calculer la surface spécifique du système étudié à l'échelle des particules de bentonite en étant sensible à la qualité de l'exfoliation, à l'échelle des amas de bentonite tels que dispersés.

Ainsi on peut écrire :

$$\text{Lim } (I(q) \times q^4) \text{ si } q\text{->}\infty = (2\pi \times (\Delta\rho)^2) \times (\text{Surface/Volume})$$

Avec Surface étant la surface spécifique.

Le contraste $\Delta\rho$ entre la bentonite et l'huile de tournesol a été calculé : 0.335.E-5 Angström-2
La fraction volumique de la solution de bentonite à 20%w (avec densité bentonite = 2,2, et tournesol = 0,94) a été convertie : 9.65%v

Ce qui a permis de déterminer la surface spécifique de la bentonite exfoliée dans un milieu lipidique à $285m^2$/g.

Comme la surface spécifique de la bentonite brute est de l'ordre de 10 à 70 m2/g, toujours inférieure à 100 m2/g, ces résultats montrent l'importance de l'exfoliation pour la qualité des interactions entre les feuillets de bentonite et notamment les molécules d'oxygène susceptibles de migrer dans les produits. En particulier, les résultats précédents montrent que ce procédé d'exfoliation dans une matrice lipidique conduit bien à une bonne exfoliation, et qu'il est observé une organisation tridimensionnelle de particules d'argiles interconnectées, jusqu'à percolation.

Ce procédé d'exfoliation peut s'appliquer à d'autres argiles et en particulier à tous les phyllosilicates.

**Préparation d'un complément alimentaire**

Un exemple de préparation d'un complément alimentaire du premier produit est maintenant décrit.

**Préparation de la phase aqueuse interne gélifiée**

Cette préparation comprend les étapes suivantes :
On remplit d'eau un bécher. Puis on ajoute les apports nutritifs hydrophiles à encapsuler. Ces apports nutritifs représentent de l'ordre de 30 % en poids par rapport au poids de l'eau mise dans le bécher. Puis on mélange la solution dans un mélangeur à fort cisaillement rotor-stator type Mélangeur Silverson, L5M-A pendant 1 min à 1000 rpm (tours par minute). Ensuite, on ajoute 3.5 % en poids d'alginate de sodium à la solution précédente. On mélange avec le mélangeur à fort cisaillement pendant 5 min à 2000 rpm. Après dispersion complète de l'alginate ci-dessus, on ajoute simultanément 0.5% en poids de pyrophosphate et 1.75% en poids de sulfate de calcium. On homogénéise rapidement la mixture au mélangeur rotor-stator à 2000 rpm, puis on verse la totalité de cette phase aqueuse dans un volume d'huile de foie de morue servant de milieu de dispersion. Le ratio du volume d'huile rapporté au volume de la phase aqueuse est inférieur à 3,4. On mélange fortement l'ensemble avec le mélangeur à fort cisaillement à 2000 rpm pour réduire la taille des gouttes d'eau dans l'huile avant la gélification de la phase aqueuse. On laisse reposer pendant 15 min pour que les particules de phase aqueuse se solidifient.

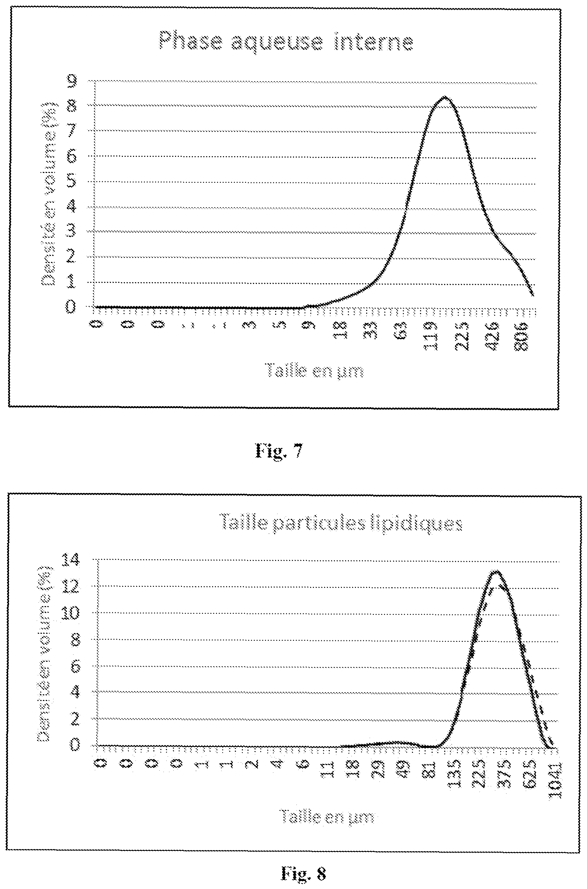

La figure 7 présente la distribution de taille des particules aqueuses gélifiées obtenues. La taille moyenne des particules de phase aqueuse obtenues avec la vitesse de cisaillement à 2000 rpm est de $161 \mu m$. La taille moyenne peut être réduite en augmentant le taux de cisaillement de la solution, ou en changeant la viscosité de la solution d'alginate. En diminuant la concentration d'alginate dans la solution de 3,5 % en poids à 2 % en poids, on a obtenu une diminution de viscosité de plus d'un facteur 10. Le cisaillement est alors plus efficace et la taille moyenne des particules diminue.

**Préparation de la phase lipidique cristallisable**

**Préparation d'un premier bécher de cire fondue**

Dans un premier bécher on ajoute une masse donnée de cire d'abeille ou de stéarate de sodium, et une masse d'huile de tournesol supérieure de 15 % à la masse de cire d'abeille ou de stéarate de sodium. La somme des deux ingrédients représente 25,5 % en poids de la masse totale de la phase lipidique préparée. Puis on met le premier bécher au bain marie préchauffé à 75°C jusqu'à la fonte totale de la cire (température de fusion de la cire de 60 à 63°C).

**Préparation d'un deuxième bécher d'argile exfoliée dans de l'huile**

Dans un deuxième bécher on ajoute 100 unités de poids d'huile de colza, 30 unités de poids d'huile de lin, 1,24 unités de poids de citrate de bétaïne, 1,24 unités de poids de lécithine de soja, 50 unités de poids de montmorillonite pré imprégnée avec 10 % en poids d'eau par rapport au poids de la montmorillonite (ce protocole d'exfoliation mené avec 10% d'eau a été optimisé pour les caractérisations en SAXS avec 50 % d'eau). On mélange l'ensemble avec le mélangeur à fort cisaillement pendant 30 min à 2000 rpm. On complète le mélange avec des apports spécifiques tels que des vitamines A, E, D, K etc... pour moins de 0,2 unités de poids. La préparation d'argile exfoliée représente de l'ordre de 30 % en poids par rapport à la masse totale de la phase lipidique préparée. La qualité de l'exfoliation de la montmorillonite dans l'huile peut être évaluée par microscopie optique en observant l'homogénéité de la dispersion, avec la réduction d'agrégats macroscopiques de plusieurs centaines de $\mu m$.

**Regroupement des phases lipidiques préparées dans un troisième bécher**

Dans un troisième bécher, maintenu au bain-marie à 70°C, on regroupe les phases huiles préparées, selon les proportions suivantes :

- 44 % en poids de la dispersion de particules aqueuses gélifiées dans une matrice lipidique d'huile de foie de morue préparée précédemment ;
- 31 % en poids du mélange du deuxième bécher (huiles de colza et de lin, montmorillonite exfoliée...) ; et
- 25 % en poids du mélange de cires liquides et d'huile de tournesol préparé précédemment.

On homogénéise avec un mélangeur à fort cisaillement pendant 2 min à 1000 rpm. On obtient une phase d'huile prête à être dispersée pour former les particules lipidiques enrichies.

**Préparation de la phase aqueuse externe**

Dans un réacteur double enveloppe, équipé d'un mobile d'agitation et d'un contrôle de température, on prépare une solution aqueuse selon la composition suivante :

- de l'eau pour un volume équivalent à 2,5 fois le volume de phase lipidique à disperser ;
- 1 % en poids par rapport à la masse de la solution aqueuse d'agent osmotique (sorbitol ou chlorure de sodium) ; et
- 0,4 % en poids par rapport à la masse de la solution aqueuse de caséine (agent tensio-actif, pouvant être substituée par des protéines animales ou végétales).

On homogénéise jusqu'à la parfaite solubilisation des ingrédients, et on porte la solution à 65°C.

**Fabrication des particules lipidiques**

Avec un mobile d'agitation apte à la dispersion de solides, on agite la phase aqueuse continue à 450 rpm en maintenant la température à 65°C. Puis, on verse rapidement la totalité de la phase lipidique préparée précédemment et maintenue à 70°C dans la phase aqueuse externe. On laisse la dispersion se stabiliser jusqu'à atteindre environ 62°C, on diminue l'agitation à 400 rpm, on refroidit avec la double enveloppe du réacteur pour atteindre 60°C, on diminue l'agitation à 350 rpm, on accélère le refroidissement en ajoutant de l'eau glacée pour atteindre rapidement 45°C, on laisse les particules lipidiques refroidir à température ambiante via la double enveloppe du réacteur en maintenant l'agitation à 150 rpm. Lorsque la dispersion est à moins de 25°C, on filtre les particules lipidiques solidifiées sur un tamis.

Les particules lipidiques ainsi obtenues sont caractérisées en taille au granulomètre Malvern Mastersizer 3000 avec une dispersion en voie liquide par l'hydro EV, avec le logiciel de l'appareil de détermination de la taille (équation de Fraunhöfer). Les mesures ont été conduites sur 3 essais de fabrications : les trois essais donnent la même taille moyenne des particules lipidiques de 330 $\mu$m (figure 8).

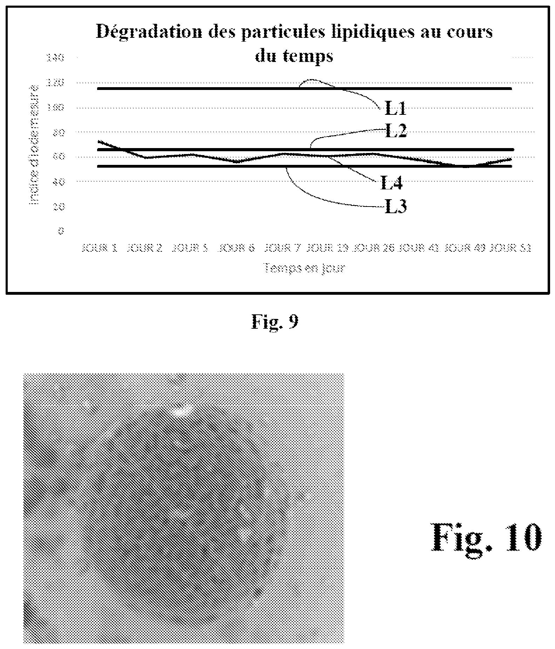

La figure 9 présente l'évolution de l'indice d'iode mesuré selon la norme NF EN ISO 3961 (septembre 2013), au cours du vieillissement à l'air libre des particules lipidiques. La ligne L1 donne l'indice d'iode de référence obtenu à partir de la formulation des particules. Les lignes L2 et L3 donnent les limites haute et basse de confiance à 95 % et la ligne L4 l'évolution de l'indice d'iode mesuré des particules lipidiques. Cette ligne L4 montre que toutes les mesures après la première se trouvent à l'intérieur de l'intervalle entre les limites haute et basse de confiance et cela permet de confirmer la stabilité au stockage des particules grâce notamment à l'augmentation du parcours moyen des molécules d'oxygène imposé par la présence d'argile. Ainsi au cours du stockage, on n'observe pas de variation significative du nombre d'insaturations (doubles liaisons issues des omégas 3-6 et 9) apportés par les huiles utilisées pour la formulation.

La figure 10 présente une image d'une particule lipidique obtenue au microscope électronique à balayage.

**Couche protidique externe - préparation de la couche protidique de recouvrement des particules lipidiques**

**Préparation de la matrice protidique contenant les particules** lipidiques :

Dans un malaxeur planétaire type pétrin, on introduit :

- 100 parties en poids de la formulation de protéines correspondant aux besoins nutritifs de l'espèce cible ;
- 33 parties en poids d'alginate de sodium ;
- 8,3 parties en poids de pyrophosphate ;
- 33 parties en poids de sulfate de calcium ;
- 1 partie en poids de sorbitol (agent osmotique)
- des additifs nutritifs selon la cible nutritionnelle (quantité inférieure à 2 parties en poids).

Après homogénéisation des solides, on ajoute un volume d'eau dont la masse correspond à 600 parties en poids et on homogénéise énergiquement avec le malaxeur planétaire type pétrin pendant 10 min.

On introduit une masse de particules lipidiques correspondant à 630 parties en poids. Remarque : il faut prendre en compte l'humidité résiduelle des particules lipidiques qui peut varier de 2 à 50 % en poids. Puis on homogénéise en limitant le cisaillement jusqu'à obtenir une pâte homogène. On introduit ensuite cette pâte dans une extrudeuse monovis à froid pour mettre en forme la pâte au travers d'une filière au diamètre cible de la taille du complément alimentaire. L'extrudat est coupé en continu par une lame rotative à la taille cible du complément alimentaire.

On laisse les particules protidiques reposer pendant deux heures pour obtenir leur solidification.

La cinétique de solidification de l'aliment a été caractérisée au Rhéomètre ARES-G2 de TA-instrument, avec le mobile cône/plan de 40 mm². Un cisaillement rotatif de 5° a été appliqué à une fréquence de 1 Hz, et l'évolution de la force au cours du temps a été mesurée.

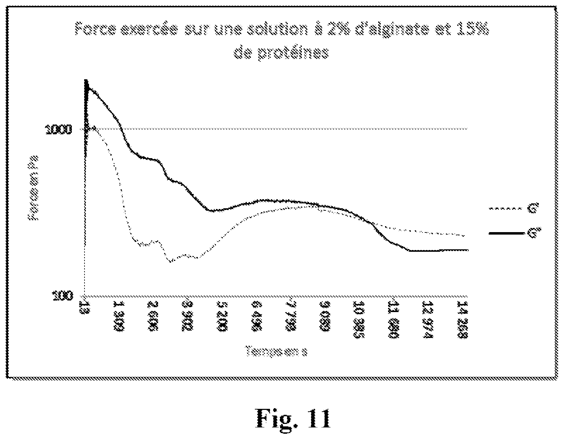

La figure 11 présente une courbe de suivi du comportement rhéologique de la couche protidique dans le cas d'une phase protidique obtenue avec 2 % en poids d'alginate et 15 % en poids de protéines par rapport au poids total de la phase protidique. Cette figure 11 donne l'évolution en fonction du temps des modules G' et G" mesurés.

On observe aux temps d'observation courts une déstructuration du gel polyélectrolyte/protéines, avec une diminution de la force de cisaillement G', marquant plusieurs paliers. Puis une reprise de la force au-delà de 3800 secondes traduisant l'émergence d'un domaine de réticulation percolant entre les deux plaques de cisaillement. Cette réticulation semble saturer à 8300 secondes, puis il y a décrochement probablement lié à la désolidarisation de l'échantillon solidifié avec la paroi du cône/plan.

On en déduit que la mixture peut être travaillée pendant environ une heure sans risquer de détruire le mécanisme de gélification, et avec deux heures de repos consécutifs on atteint le niveau de rigidité maximum du complément alimentaire. Les particules protidiques ainsi obtenues peuvent être stockés au frais (4°C), ou utilisées pour l'étape d'enrobage par dépôt de couche de biopolymère couche-par-couche, en anglais « Layer by Layer ».

La figure 12 présente un exemple de particules protidiques obtenues après gélification d'une taille de l'ordre du millimètre.

**Préparation de l'enrobage de modulation du relargage par un biopolymère déposé en couche par couche (en anglais « layer by layer »)**

**Enrobage couche par couche**

Le mode opératoire est décrit pour 100 g de particules lipidiques dispersées dans 300 g d'eau supplémentée de 1 % de sorbitol.

On utilise un mobile d'agitation favorisant une bonne homogénéisation, sans induire un cisaillement excessif de la solution (mobile ailettes doubles).

On prépare :

- 2000 ml d'une première solution aqueuse de chitosan (M+) à 0,1 % en poids par rapport au poids de la solution aqueuse (avec 0.05% en poids d'acide acétique) ;
- 2000 ml d'une seconde solution aqueuse d'alginate de sodium (M-) à 0,1 % en poids ;
- 200 ml d'une troisième solution aqueuse de chlorure de calcium (R+) à 2 % en poids ; et
- 200 ml d'une quatrième solution aqueuse de SMTP (R-) à 0,5% en poids.

Remarque : le TSTP est obtenu par pontage chimique du SMTP qui est le réactif introduit.

On commence les ajouts par la solution d'alginate de sodium à 0,1 % en poids ; on agite pendant 1 à 2 min entre chaque ajout. On ajoute ensuite la solution de chitosan.

La marche suivie et les proportions de chaque ajout sont les suivantes (tous les % sont des % en poids) :

- + 20 ml de solution d'alginate de sodium à 0,1 % ;
- + 20 ml de solution de chitosan à 0,1 % ;
- + 60 ml de solution d'alginate de sodium à 0,1 % ;
- + 20 ml de solution de SMTP à 0,5 % ;
- +10 ml de solution de chitosan à 0,1 % ;
- + 10 ml de solution de chlorure de calcium à 2 % ;
- + 4,25 g de montmorillonite ;
- + 100 ml de solution de chitosan à 0,1 % ;
- + 80 ml de solution d'alginate de sodium à 0,1 % ;
- + 20 ml de solution de chitosan à 0,1 % ; et
- + 20 ml de solution de chlorure de calcium à 2 %.

On agite pendant 15 min à 370 rpm. Ce mode opératoire permet d'obtenir un enrobage à sept couches dont la première est une couche d'alginate de sodium anionique et la dernière de chitosan cationique. Au milieu de l'enrobage, il y a une couche de feuillets de smectite (montmorillonite) (MR). Ces opérations ont pu être répétées jusqu'à sept fois au laboratoire.

**Caractérisations** :

Les particules lipidiques restent dispersées en solution, on suit à l'oeil nu la non-floculation au fil des ajouts de biopolymères chargés.

Le suivi conductimétrique de la conductance des solutions permet de suivre le dépôt des biopolymères chargés.

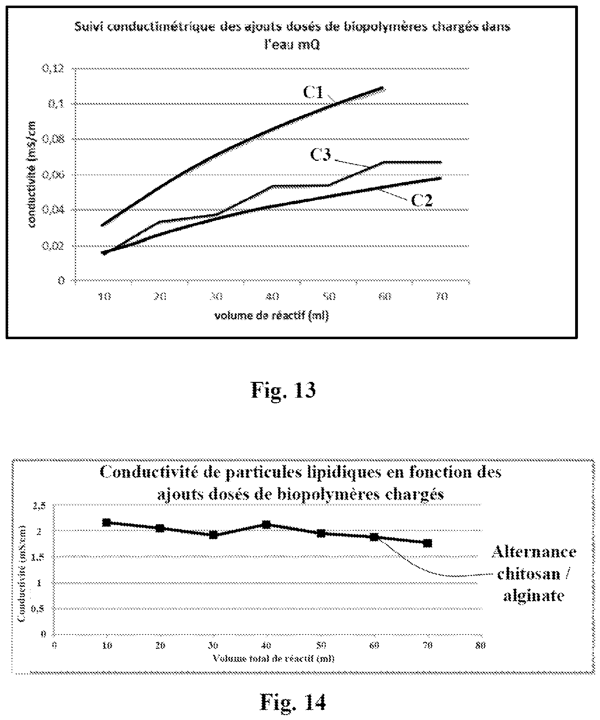

Comme référence, on mesure l'évolution de la conductivité d'une solution d'eau pur, à laquelle on effectue des ajouts dosés de solution de chitosan à 0,1% (courbe C1), puis de façon indépendante des ajouts dosés d'alginate de sodium à 0,1 % (courbe C2), et enfin la combinaison des deux (courbe C3). La figure 13 montre les résultats obtenus.

On caractérise ainsi l'augmentation de la conductivité de la solution lors des ajouts de chitosan et d'alginate de sodium, avec une conductivité plus importante pour l'alginate. La combinaison des deux réactifs se traduit par une augmentation en dents de scie moins rapide de la conductivité comparée à celle des polymères anioniques et cationiques seuls, car les charges se neutralisent en grande partie, et le rayon de giration des coacervats devient plus grand (conductivité apparente moins élevée).

La figure 14 montre l'évolution de la conductivité d'une solution de particules lipidiques lors des ajouts dosés de biopolymères chargés. Cette figure 14 montre que l'ajout de biopolymères anioniques (M-) et cationiques (M+) n'induit pas d'augmentation de la conductivité de la solution, au contraire, elle diminue. C'est la signature de la condensation des biopolymères anioniques et cationiques à la surface des particules, conduisant à la diminution de la conductivité globale de la solution, car les grosses particules de lipides contribuent peu à la conductivité, et les sels en solution (agent osmotique) sont piégés dans l'interface au cours de la condensation, et ne contribuent plus à la conductivité de la solution.

Les aliments et les compléments alimentaires qui constituent certains des objets de l'invention sont donc des produits à architecture modulaire qui permettent d'encapsuler des nutriments et substances actives diverses et de les relarguer dans le système digestif des animaux cibles.

La stabilisation grâce aux matériaux de l'enrobage lui permet de résister au milieu acide de l'estomac tout en permettant une désagrégation rapide en milieu basique ultérieur ce qui assure un relargage très rapide et efficace de l'ensemble des nutriments et substances actives là où ils sont les plus efficaces.

L'architecture modulaire du noyau permet d'incorporer dans la phase interne aqueuse de l'ordre de vingt substances actives hydrosolubles différentes, dans le premier produit, cette incorporation se fait dans des particules de diamètre de l'ordre de 20 à 100 $\mu$m ; dans la phase interne lipidique, on peut incorporer aussi de l'ordre de vingt substances actives liposolubles différentes dans une matrice de diamètre de l'ordre de 400 $\mu$m ou moins.

Le procédé de fabrication est lui aussi très respectueux de ces nutriments et substances actives.

Les produits objets de l'invention sont ainsi avec leur architecture modulaire d'usage très souple et en faisant varier les conditions de fabrication, on peut faire varier les dimensions respectives des particules et des noyaux ainsi que la nature et la quantité des substances actives et des nutriments pour les adapter finement à tous les animaux cibles.

## Revendications

1. Aliment ou complément alimentaire permettant une libération contrôlée de substances nutritives et/ou physiologiquement actives pour animaux monogastriques, comprenant un noyau 12 et un enrobage 14 du noyau 12, ledit noyau 12 comprenant une phase aqueuse A avec des substances actives hydrosolubles et une phase lipidique 18 avec des composants actifs liposolubles, **caractérisé en ce que** la phase aqueuse A est constituée de particules gélifiées 16, les particules gélifiées 16 étant dispersées dans la phase lipidique 18, et **caractérisé en ce que** ladite phase lipidique 18 comporte une charge minérale exfoliée choisie dans le groupe des phyllosilicates.

2. Aliment ou complément alimentaire selon la revendication 1, dans lequel le phyllosilicate est une smectite.

3. Aliment ou complément alimentaire selon l'une quelconque des revendications précédentes, dans lequel la dispersion de la charge minérale dans la phase lipidique 18 est réalisée en présence d'un agent de surface.

4. Aliment ou complément alimentaire selon la revendication 3, dans lequel l'agent de surface a une tête polaire cationique ou zwitterionique.

5. Aliment ou complément alimentaire selon la revendication 3 ou 4, dans lequel l'agent de surface est de la lécithine.

6. Aliment ou complément alimentaire selon l'une quelconque des revendications précédentes, dans lequel ladite charge minérale a une teneur dans ladite phase lipidique 18 comprise entre 0,5 et 35 % en poids par rapport au poids de ladite phase lipidique 18 et de préférence comprise entre 0,5% et 15 % en poids.

7. Aliment ou complément alimentaire selon l'une quelconque des revendications précédentes, comportant une phase protidique 11 gélifiée disposée entre ledit noyau 12 et ledit enrobage 14.

8. Aliment ou complément alimentaire selon la revendication 7, dans lequel ladite phase protidique 11 gélifiée comporte une charge minérale.

9. Aliment ou complément alimentaire selon l'une quelconque des revendications précédentes, dans lequel l'enrobage 14 du noyau 12 comporte n couches C de matériaux biocompatibles avec un empilement alterné de charges électrostatiques positives et négatives qui forment des coacervats réticulés et structurés en empilement de couches, n étant au moins égal à 2 et les n couches C comprenant au moins une couche C+ comprenant un matériau biocompatible M+ à charges électrostatiques positives et un agent de réticulation R- choisi parmi les anions multichargés, et au moins une couche C-comprenant un matériau biocompatible M- à charges électrostatiques négatives et un agent de réticulation R+ choisi parmi les cations multivalents.

10. Aliment ou complément alimentaire selon la revendication 9, dans lequel l'enrobage 14 comporte au moins une couche de matériau de renfort MR.

11. Aliment ou complément alimentaire selon l'une des revendications 8 à 10, dans lequel ladite charge minérale ou ledit matériau de renfort MR est choisi dans le groupe des argiles, des silices et des fibres chargées, avantageusement dans le groupe des phyllosilicates.

12. Aliment ou complément alimentaire selon la revendication 11, dans lequel ledit phyllosilicate est une smectite.

13. Aliment ou complément alimentaire selon l'une quelconque des revendications précédentes, dans lequel ladite phase aqueuse comporte un polysaccharide fonctionnalisé carboxylique chargé négativement, tel un alginate avec une teneur comprise entre 1 et 8 % en poids par rapport au poids d'un extrait sec de ladite phase aqueuse.

14. Aliment ou complément alimentaire selon la revendication 13, dans lequel ladite phase aqueuse A est gélifiée par réaction dudit polysaccharide chargé avec des réactifs tels un sel de calcium en présence de pyrophosphate ou deltagluconolactone.

**Patentansprüche**

1. Futtermittel oder Ergänzungsfuttermittel, das eine kontrollierte Freisetzung nährstoffreicher und/oder physiologisch aktiver Substanzen für Nicht-Wiederkäuer ermöglicht, einschließlich eines Kerns 12 und einer Umhüllung 14 des Kerns 12, wobei der Kern 12 eine Wasserphase A mit wasserlöslichen Wirkstoffen und eine Lipidphase 18 mit fettlöslichen aktiven Bestandteilen umfasst, **dadurch gekennzeichnet, dass** die Wasserphase A aus gelierten Partikeln 16 besteht und die gelierten Partikel 16 in der Lipidphase 18 dispergiert sind, und **dadurch gekennzeichnet, dass** die Lipidphase 18 einen aus der Gruppe der Phyllosilikate ausgewählten aufgeblätterten mineralischen Füllstoff umfasst.

2. Futtermittel oder Ergänzungsfuttermittel nach Anspruch 1, wobei es sich beim Phyllosilikat um einen Smektiten handelt.

3. Futtermittel oder Ergänzungsfuttermittel nach einem der vorhergehenden Ansprüche, wobei die Dispersion des mineralischen Füllstoffs in der Lipidphase 18 in Gegenwart eines Tensids erfolgt.

4. Futtermittel oder Ergänzungsfuttermittel nach Anspruch 3, wobei das Tensid einen kationischen oder zwitterionischen polaren Kopf besitzt.

5. Futtermittel oder Ergänzungsfuttermittel nach Anspruch 3 oder 4, wobei es beim Tensid um Lecithin handelt.

6. Futtermittel oder Ergänzungsfuttermittel nach einem der vorhergehenden Ansprüche, wobei der mineralische Füllstoff in der Lipidphase 18 einen Gehalt zwischen 0,5 und 35 Gewichtsprozent des Gewichts der Lipidphase 18 aufweist und vorzugsweise zwischen 0,5 und 15 Gewichtsprozent liegt.

7. Futtermittel oder Ergänzungsfuttermittel nach einem der vorhergehenden Ansprüche, das eine gelierte Proteinphase 11 umfasst, die zwischen dem Kern 12 und der Umhüllung 14 angeordnet ist.

8. Futtermittel oder Ergänzungsfuttermittel nach Anspruch 7, wobei die gelierte Proteinphase 11 einen mineralischen Füllstoff umfasst.

9. Futtermittel oder Ergänzungsfuttermittel nach einem der vorhergehenden Ansprüche, wobei die Umhüllung 14 des Kerns 12 n Schichten C biokompatibler Materialien umfasst, die mit einem abwechselnden Stapel positiver und negativer elektrostatischer Ladungen kompatibel sind, die vernetzte und strukturierte Koazervate in gestapelten Schichten bilden, wobei n mindestens gleich 2 ist und die n Schichten C mindestens eine Schicht C+ aus einem biokompatiblen Material M+ mit positiver elektrostatischer Ladung und ein aus den mehrfach geladenen Anionen ausgewähltes Vernetzungsmittel R- und mindestens eine Schicht C- aus einem biokompatiblen Material M- mit negativer elektrostatischer Ladung und ein aus den multivalenten Kationen ausgewähltes Vernetzungsmittel R+ aufweisen.

10. Futtermittel oder Ergänzungsfuttermittel nach Anspruch 9, wobei die Umhüllung 14 mindestens eine Schicht Verstärkungsmaterial MR umfasst.

11. Nahrungsmittel oder Nahrungsergänzungsmittel nach einem der Ansprüche 8 bis 10, wobei der mineralische Füllstoff oder das Verstärkungsmaterial MR aus der Gruppe der Tone, Kieselerden und geladenen Fasern ausgewählt wird, vorzugsweise aus der Gruppe der Phyllosilikate.

12. Futtermittel oder Ergänzungsfuttermittel nach Anspruch 11, wobei es sich beim Phyllosilikat um einen Smektiten handelt.

13. Futtermittel oder Ergänzungsfuttermittel nach einem der vorhergehenden Ansprüche, wobei die Wasserphase ein negativ geladenes, carboxylfunktionalisiertes Polysaccharid umfasst, beispielsweise ein Alginat mit einem Gehalt zwischen 1 und 8 Gewichtsprozent des Gewichts einer Trockensubstanz der Wasserphase.

14. Futtermittel oder Ergänzungsfuttermittel nach Anspruch 13, wobei die Wasserphase A durch Reaktion des geladenen Polysaccharids mit Reagenzien, wie beispielsweise einem Kalziumsalz, in Gegenwart von Pyrophosphat oder Glucono-delta-Lacton geliert.

## Claims

1. Feed or feed supplement allowing a controlled release of nutrients and/or physiologically active substances for monogastric animals, comprising a core 12 and a coating 14 of the core 12, said core 12 comprising an aqueous phase A with water-soluble active substances and a lipid phase 18 with fat-soluble active components, **characterised in that** the aqueous phase A is composed of gelled particles 16, the gelled particles 16 being dispersed in the lipid phase 18, and **characterised in that** said lipid phase 18 comprises an exfoliated mineral filler chosen from the phyllosilicate group.

2. Feed or feed supplement according to claim 1, wherein the phyllosilicate is smectite.

3. Feed or feed supplement according to any one of the preceding claims, wherein the dispersion of the mineral filler in the lipid phase 18 is carried out in the presence of a surfactant.

4. Feed or feed supplement according to claim 3, wherein the surfactant has a cationic or zwitterionic polar head.

5. Feed or feed supplement according to claim 3 or 4, wherein the surfactant is lecithin.

6. Feed or feed supplement according to any one of the preceding claims, wherein said mineral filler has a content in said lipid phase 18 of between 0.5 and 35 wt.% relative to the weight of said lipid phase 18 and preferably of between 0.5 and 15 wt.%.

7. Feed or feed supplement according to any one of the preceding claims, comprising a gelled protein phase 11 arranged between said core 12 and said coating 14.

8. Feed or feed supplement according to claim 7, wherein said gelled protein phase 11 comprises a mineral filler.

9. Feed or feed supplement according to any one of the preceding claims, wherein the coating 14 of the core 12 comprises n layers C of biocompatible materials with an alternating stack of positive and negative electrostatic charges that form crosslinked and layer-stacked coacervates, n being at least equal to 2 and the n layers C comprising at least one layer C+ comprising a biocompatible material M+ with positive electrostatic charges and a crosslinking agent R-chosen from multi-charged anions, and at least one layer C- comprising a biocompatible material M- with negative electrostatic charges and a crosslinking agent R+ chosen from multivalent cations.

10. Feed or feed supplement according to claim 9, wherein the coating 14 comprises at least one layer of the reinforcement material MR.

11. Feed or feed supplement according to any one of claims 8 to 10, wherein said mineral filler or said reinforcement material MR is selected from the group of clays, silicas, and charged fibres, advantageously from the group of phyllosilicates.

12. Feed or feed supplement according to claim 11, wherein said phyllosilicate is a smectite.

13. Feed or feed supplement according to any one of the preceding claims, wherein said aqueous phase comprises a negatively charged functionalized carboxylic polysaccharide, such as an alginate with a content of between 1 and 8% wt.% relative to the weight of a dry extract of said aqueous phase.

14. Feed or feed supplement according to claim 13, wherein said aqueous phase A is gelled by reacting said charged polysaccharide with reagents such as a calcium salt in the presence of pyrophosphate or deltagluconolactone.

Fig. 1

Fig. 2

**Fig. 3**

**Fig. 4**

Fig. 5

| Etape (g) | Obtention des particules lipidiques |
| Etape (g'') | Formation enrobage phase lipidique |
| Etape (g') | Ajout couche protidique et découpe |
| Etape (h) | Formation de l'enrobage |

Fig. 6

Fig. 7

Fig. 8

**Dégradation des particules lipidiques au cours du temps**

Fig. 9

# Fig. 10

Fig. 11

Fig. 12

**Fig. 13**

**Fig. 14**

**Fig. 15**

**Fig. 16**

Fig. 17

**EP 4 054 353 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H10327770 B